(19) **Europäisches Patentamt / European Patent Office / Office européen des brevets**

(11) **EP 4 757 444 A1**

(12) **EUROPEAN PATENT APPLICATION**
published in accordance with Art. 153(4) EPC

(43) Date of publication:
**10.06.2026 Bulletin 2026/24**

(21) Application number: **24853403.4**

(22) Date of filing: **03.07.2024**

(51) International Patent Classification (IPC):
*H04W 56/00* (2009.01)

(86) International application number:
**PCT/CN2024/103243**

(87) International publication number:
**WO 2025/035988 (20.02.2025 Gazette 2025/08)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **11.08.2023 CN 202311016788**

(71) Applicant: **ZTE CORPORATION**
**Shenzhen, Guangdong 518057 (CN)**

(72) Inventors:
- **CHEN, Jie**
  **Shenzhen, Guangdong 518057 (CN)**
- **LU, Youxiong**
  **Shenzhen, Guangdong 518057 (CN)**
- **XING, Weimin**
  **Shenzhen, Guangdong 518057 (CN)**
- **HU, Yuzhou**
  **Shenzhen, Guangdong 518057 (CN)**
- **HE, Haigang**
  **Shenzhen, Guangdong 518057 (CN)**

(74) Representative: **Ziebig Hengelhaupt Intellectual Property Attorneys Patentanwaltskanzlei PartGmbB Leipziger Straße 49 10117 Berlin (DE)**

(54) **SYNCHRONIZATION SIGNAL BLOCK TRANSMISSION METHOD, AND COMMUNICATION NODE AND STORAGE MEDIUM**

(57) Provided in the present application are a synchronization signal block (SSB) transmission method, and a communication node and a storage medium. The method comprises: on the basis of power configuration parameters, determining transmission power for an SSB on an SSB slot, and transmission power of an SSB repetition on same; and on the basis of the transmission power of the SSB and the transmission power of the SSB repetition, transmitting the SSB and the SSB repetition on a specific resource block set on the SSB slot.

Determine transmission power for a synchronization signal block (SSB) and transmission power of an SSB repetition on an SSB slot on the basis of power configuration parameters — 110

Transmit the SSB and the SSB repetition on a specific resource block set on the SSB slot on the basis of the transmission power of the SSB and the transmission power of the SSB repetition — 120

FIG. 1

## Description

### CROSS REFERENCE TO RELATED APPLICATIONS

This application claims priority to Chinese Patent Application No. 202311016788.0, filed on August 11, 2023, entitled "synchronous signal block transmission method, and communication node and storage medium", the entire content of which is incorporated herein by reference.

### TECHNICAL FIELD

The present application relates to the field of wireless communication technology, for example, to a synchronization signal block (SSB) transmission method, and a communication node and a storage medium.

### BACKGROUND

Sidelink-Unlicense (SL-U) communication is based on a communication resource pool, however, the time slot (Slot) in which the synchronization signal block (SSB) transmitted on the SL is not included within the resource pool, as a result, the SL-U communication resource pool is discontinuous in the time domain. When a communication node acquires a channel within a resource pool, in order to maintain the channel on an SSB slot, the node may need to transmit SSBs and SSB repetitions on a plurality of resource block (RB) sets on the slot where the SSB is located, however, there is currently no clear solution for transmitting SSBs and SSB repetitions on an SSB slot in order to maintain the channel, and the transmission power cannot be effectively determined.

### SUMMARY

Provided in the present application are a synchronization signal block (SSB) transmission method, and a communication node and a storage medium.

An embodiment of the present application provides a synchronization signal block transmission method, including: on the basis of power configuration parameters, determining transmission power for an synchronization signal block called SSB on an SSB slot, and transmission power of an SSB repetition; and on the basis of the transmission power of the SSB and the transmission power of the SSB repetition, transmitting the SSB and the SSB repetition on a specific resource block set on the SSB slot.

An embodiment of the present application further provides a synchronization signal block transmission device, including: a power determination module, configured to determining transmission power for an synchronization signal block (SSB) and transmission power of an SSB repetition on an SSB slot on the basis of power configuration parameters; and a transmission module, configured to transmit the SSB and the SSB repetition on a specific resource block set on the SSB slot on the basis of the transmission power of the SSB and the transmission power of the SSB repetition.

An embodiment of the present application further provides a communication node, including: a memory, a processor, and a computer program stored in the memory and executable on the processor, the processor, when executing the program, implements the synchronization signal block transmission method as described above.

An embodiment of the present application further provides a computer-readable storage medium, the computer-readable storage medium stores a computer program, the computer program, when executed by a processor, implements the synchronization signal block transmission method as described above.

### BRIEF DESCRIPTION OF THE DRAWINGS

FIG. 1 is a flow chart of a synchronization signal block transmission method provided in an embodiment;
FIG. 2 is a schematic diagram of performing channel maintenance by transmitting SSBs and SSB repetitions provided in an embodiment;
FIG. 3 is a schematic diagram of transmitting a PSSCH provided in an embodiment;
FIG. 4 is a schematic diagram of transmitting SSBs and SSB repetitions on a plurality of resource block sets provided in an embodiment;
FIG. 5 is a schematic diagram of a resource pool where a COT is located provided in an embodiment;
FIG. 6 is a schematic diagram of a channel occupancy time provided in an embodiment;
FIG. 7 is a structural schematic diagram of a synchronization signal block transmission device provided in an embodiment; and

FIG. 8 is a schematic diagram illustrating a hardware structure of a communication node provided in an embodiment.

## DETAILED DESCRIPTION

The present application will be described with reference to the accompanying drawings and embodiments. It can be understood that the specific embodiments described here are merely used to illustrate the present application and not intended to be limiting. It should also be noted that, in the absence of conflict, the embodiments of the present application and features in the embodiments may be arbitrarily combined with each other. It should also be noted that, for ease of description, only the parts related to the present application rather than all structures are shown in the accompanying drawings.

In SL-U communication, for a user equipment (UE) to transmit data, it must first acquire a channel, that is, acquiring a channel by listen-before-talk (LBT) technology or by sharing a channel acquired by other devices. Typically, after acquiring a channel, a device (such as UE, also known as a communication node) may continuously occupy the channel for a period of time. However, to prevent loss of the channel, the device that acquires the channel generally needs to ensure that the gap between a current transmission and a previous transmission is not too large, otherwise the channel acquired by the device may be preempted by other devices, resulting in failure of the current transmission. It is generally considered that after a device acquires a channel, the gap between two transmissions does not exceed 25 μs, otherwise the channel may easily be preempted by other devices, resulting in communication failure.

Channel occupancy in unlicensed frequency bands is defined in the time domain as a maximum occupancy duration, generally up to 10 ms, in the frequency domain, it is granularized by an LBT bandwidth (20 MHZ), an SSB of a UE occupies only 11 consecutive physical resource blocks (PRB) in the frequency domain. When operating in unlicensed spectrum, many regions generally require that the actual occupied bandwidth of a signal or channel within an LBT bandwidth meets 80% OCB requirement. Therefore, when transmitting an SSB in regions with OCB requirements, it not only needs to transmit an SSB occupying 11 PRBs for synchronization function within the LBT bandwidth, but also needs to continue transmitting SSB repetitions so as to meet the OCB requirement within the LBT bandwidth. Furthermore, in order to continue to maintain the channels within the resource pool, the UE may transmit SSBs or SSB repetitions across a plurality of LBT bandwidths on the SSB slot.

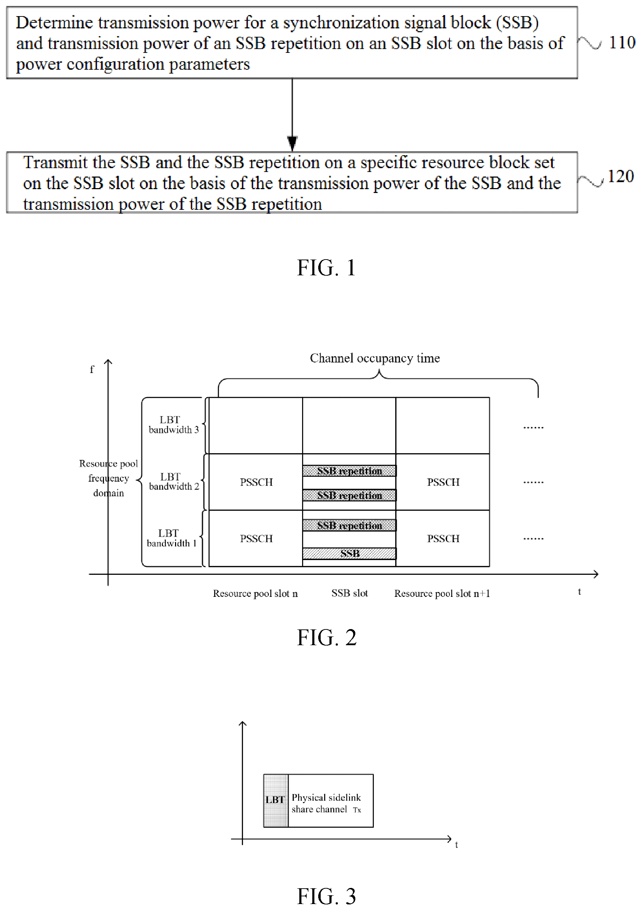

FIG. 2 is a schematic diagram of performing channel maintenance by transmitting SSBs and SSB repetitions provided in an embodiment. As shown in FIG. 2, the UE transmits data on slot n of the resource pool and occupies 2 LBT bandwidths, it also needs to transmit data on slot n+1 of the resource pool, then the device needs to transmit SSB and SSB repetition signals on the slot between slot n and slot n+1 of the resource pool. In addition to its synchronization function, the SSB slot may also serve to perform channel maintenance.

In unlicensed spectrum, the device must acquire a channel before transmitting a channel or signal, which includes using Type 1 LBT or Type 2 LBT. The frequency-domain granularity for channel acquisition is the LBT bandwidth (20 M). For a newly acquired channel, depending on the service priority, the device may occupy the channel continuously within the maximum channel occupancy time. Once the maximum channel occupancy time is exceeded, the device needs to perform channel sensing again to reacquire the channel.

FIG. 3 is a schematic diagram of transmitting a physical sidelink share channel (PSSCH) provided in an embodiment. As shown in FIG. 3, before transmitting a PSSCH, the device must first perform LBT channel sensing, if the channel is determined to be idle, the UE may transmit the PSSCH after the LBT ends; if the channel is determined to be busy, the UE fails to acquire the channel and cannot transmit the PSSCH.

For the case where only one SSB is transmitted on the SSB slot, the transmit power of the SSB is determined as follows:

The UE determines the power $P_{S\text{-}SSB}(i)$ for the S-SS/PSBCH block transmission occasion in slot i on active SL BWP b of a carrier f of serving cell c as:

$$P_{S\text{-}SSB}(i) = \min\left(P_{CMAX}, P_{O,S\text{-}SSB} + 10\log_{10}\left(2^{\mu} \cdot M_{RB}^{S\text{-}SSB}\right) + \alpha_{S\text{-}SSB} \cdot PL\right) \ [dBm]$$

$P_{CMAX}$ is the maximum transmission power of the device, which is a higher-layer configured parameter; $P_{O,S\text{-}SSB}$ is the target receive power, which may be the value provided by dl-P0-PSBCH; if $P_{O,S\text{-}SSB}$ is not provided, then $P_{S\text{-}SSB}(i) = P_{CMAX}$; $\alpha_{S\text{-}SSB}$ is the pathloss factor, which may be the value provided by dl-Alpha-PSBCH; if $P_{O,S\text{-}SSB}$ is not provided, then $\alpha_{S\text{-}SSB}=1$; PL is the path loss, and min(,) denotes taking the minimum value.

RS resources refer to resources used by the UE to determine the power of a PUSCH transmission scheduled by DCI format 0_0 of serving cell c when the UE is configured to monitor the PDCCH for detecting DCI format 0_0 in serving cell c; $M_{RB}^{S\text{-}SSB}$ is the number of resource blocks for an S-SS/PSBCH block transmission with SCS configuration μ, that

is, the number of PRBs in the bandwidth of one SL SSB, and $M_{RB}^{S\text{-}SSB}=11$.

FIG. 1 is a flow chart of a synchronization signal block transmission method provided in an embodiment, as shown in FIG. 1, the method provided in this embodiment includes step 110 and step 120.

In step 110, transmission power for a synchronization signal block (SSB) and transmission power of an SSB repetition on an SSB slot are determined on the basis of power configuration parameters.

In step 120, the SSB and the SSB repetition are transmitted on a specific resource block set on the SSB slot on the basis of the transmission power of the SSB and the transmission power of the SSB repetition.

In this embodiment, the power configuration parameters may be system-configured or pre-configured. In the embodiments of the present application, configuration and pre-configuration are not distinguished, and the configuration mentioned generally also includes pre-configuration.

The frequency domain LBT granularity on the unlicensed spectrum is generally 20M, which may be called an LBT bandwidth, or a resource block set (RB Set).

In this embodiment, the transmission power of an SSB and SSB repetition may be determined on the basis of power configuration parameters, and an SSB and SSB repetition are transmitted on a specific resource block set on an SSB time slot to implement synchronization and channel maintenance, thereby improving reliability and stability of SL communication.

In one embodiment, the specific resource block set includes one of the following: an anchor resource block set and a non-anchor resource block set within channel occupancy time; an anchor resource block set and a non-anchor resource block set for which listen-before-talk (LBT) is successful within channel occupancy time; a resource block set within channel occupancy time; or a resource block set for which LBT is successful within channel occupancy time.

In this embodiment, the channel occupancy time includes (or covers) an SSB transmission occasion (SSB Slot) in the time domain. It includes at least one continuous RB Set in the frequency domain. An RB Set configured or preconfigured via higher-layer signaling absolute radio frequency channel number (ARFCN), in which an SSB is located, is referred to as an anchor RB Set or default RB Set, this SSB may also be known as an anchor SSB or default SSB.

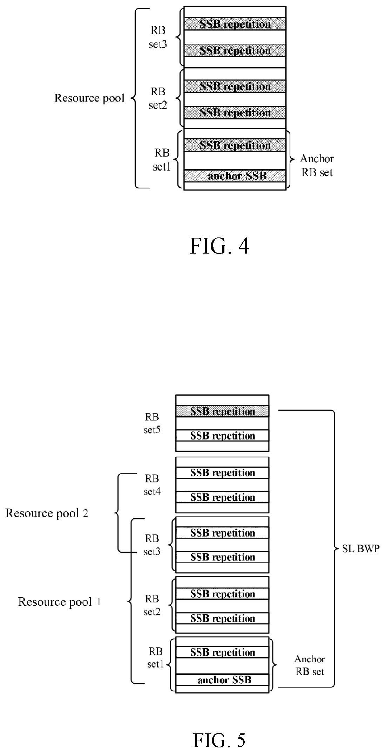

FIG. 4 is a schematic diagram of transmitting SSBs and SSB repetitions on a plurality of resource block sets provided in an embodiment. As shown in FIG. 4, within the anchor RB Set, the device determines anchor SSB resource location based on configured or pre-configured ARFCN information, further, on the basis of the anchor SSB resource location, gap, and number of repetitions, the device determines the frequency-domain positions of all SSBs within the anchor RB Set. The relative positions of SSBs on other non-anchor RB Sets within corresponding RB Sets are the same as the relative resource positions of all SSBs on the anchor RB Set within corresponding anchor RB Set. Generally, an SL UE performs synchronization-related procedures based on the SSBs transmitted on the anchor resource block set. The SSB specified by the ARFCN parameter in the anchor RB Set is the anchor SSB, and other SSBs in the anchor RB Set and each SSB in non-anchor RB Sets may be referred to as SSB repetitions.

In one embodiment, the power configuration parameters include a maximum transmission power of a device (denoted as $P_{CMAX}$, which is a device-level capability indicating the maximum power the device can transmit) and a maximum transmission power of an anchor resource block set (denoted as $P_{CMAX\_anchor}$).

Transmission power of an SSB and transmission power of an SSB repetition on an SSB slot are determined on the basis of power configuration parameters includes the following steps 1110 and 1120.

Step 1110: transmission power of an anchor resource block set is determined on the basis of power configuration parameters, the transmission power of an anchor resource block set includes transmission power of an SSB and transmission power of an SSB repetition in the anchor resource block set (transmission power of an SSB and transmission power of an SSB repetition in the anchor resource block set may also be understood as actual transmission power).

A sum of transmission power for an SSB and transmission power of an SSB repetition in an anchor resource block set does not exceed the maximum transmission power of the anchor resource block set.

Step 1120: transmission power of an SSB repetition in a non-anchor resource block set within a specified range is determined on the basis of power configuration parameters, or transmission power of an SSB repetition in a non-anchor resource block set within a specified range is determined on the basis of power configuration parameters and transmission power of SSB and transmission power of an SSB repetition in the anchor resource block set.

In this embodiment, in the process of determining transmission power of an SSB repetition in a non-anchor resource block set within a specified range, a maximum transmission power of an SSB repetition in a non-anchor resource block set within a specified range may be determined first; then the transmission power of an SSB repetition in a non-anchor resource block set within a specified range (it may also be understood as actual transmission power) is determined on the basis of the maximum transmission power of an SSB repetition in a non-anchor resource block set within a specified range.

In one embodiment, the determination of transmission power of an SSB repetition in a non-anchor resource block set within a specified range on the basis of power configuration parameters includes: a maximum transmission power of SSB repetitions on each non-anchor resource block set within a specified range is determined on the basis of a maximum transmission power of a device and a maximum transmission power of an anchor resource block set, and the maximum transmission power of SSB repetitions on each non-anchor resource block set within a specified range is determined includes the remaining power headroom is equally allocated to SSB repetitions corresponding to each non-anchor resource block set within a specified range, wherein the remaining power headroom is a difference between the maximum transmission power of the device and the maximum transmission power of the anchor resource block set; or a maximum transmission power of SSB repetitions on all non-anchor resource block sets within a specified range is determined on the basis of a maximum transmission power of a device and a maximum transmission power of an anchor resource block set, the maximum transmission power of SSB repetitions on all non-anchor resource block sets includes a difference between the maximum transmission power of the device and the maximum transmission power of the anchor resource block set.

The determination of transmission power of an SSB repetition in a non-anchor resource block set within a specified range, on the basis of power configuration parameters and transmission power of an SSB and transmission power of an SSB repetition in the anchor resource block set, includes: a maximum transmission power of SSB repetitions on each non-anchor resource block set within a specified range is determined on the basis of a maximum transmission power of a device and transmission power of an SSB and transmission power of an SSB repetition on the anchor resource block set, and a maximum transmission power of SSB repetitions on each non-anchor resource block set within a specified range is determined includes remaining power headroom is equally allocated to SSB repetitions corresponding to each non-anchor resource block set within a specified range, wherein the remaining power headroom is a difference between the maximum transmission power of the device and the transmission power of an SSB and the transmission power of an SSB repetition on the anchor resource block set; or a maximum transmission power of SSB repetitions on all non-anchor resource block sets within a specified range is determined on the basis of a maximum transmission power of a device and transmission power of an SSB and transmission power of an SSB repetition on the anchor resource block set, the maximum transmission power of SSB repetitions on all non-anchor resource block sets includes a difference between the maximum transmission power of the device and the transmission power of an SSB and the transmission power of an SSB repetition on the anchor resource block set.

In one embodiment, the determination of transmission power of an anchor resource block set on the basis of power configuration parameters includes: upon the condition that power control parameters (such as target receive power) are configured, transmission power of the anchor resource block set is determined, on the basis of the power control parameters, power control strategy (such as a calculation formula for transmission power) and a maximum transmission power of the anchor resource block set, as transmission power of L SSBs of the anchor resource block set; or transmission power of the anchor resource block set is determined on the basis of the power control parameters, power control strategy and a maximum transmission power of the anchor resource block set, and the transmission power on the anchor resource block set is equally allocated to L SSBs within the anchor resource block set.

In one embodiment, the determination of transmission power of an anchor resource block set on the basis of power configuration parameters includes: upon the condition that power control parameters are not configured, transmission power of the anchor resource block set is determined, on the basis of a maximum transmission power of the anchor resource block set, as transmission power of L SSBs of the anchor resource block set; or transmission power of the anchor resource block set is determined on the basis of a maximum transmission power of the anchor resource block set, and the transmission power on the anchor resource block set is equally allocated to L SSBs within the anchor resource block set.

In one embodiment, the determination of transmission power of an SSB repetition in a non-anchor resource block set within a specified range on the basis of power configuration parameters further includes: upon the condition that power control parameters are configured, transmission power of the non-anchor resource block set is determined, on the basis of the power control parameters, power control strategy and a maximum transmission power of an SSB repetition on the non-anchor resource block set, as transmission power of L SSB repetitions of the non-anchor resource block set; or transmission power of the non-anchor resource block set is determined on the basis of the power control parameters, power control strategy and a maximum transmission power of an SSB repetition on the non-anchor resource block set, and the transmission power of the non-anchor resource block set is equally allocated to L SSBs within the non-anchor resource block set.

In one embodiment, the determination of transmission power of the non-anchor resource block set on the basis of a maximum transmission power of an SSB repetition on the non-anchor resource block set includes: upon the condition that power control parameters are not configured, transmission power of the non-anchor resource block set is determined, on the basis of a maximum transmission power of an SSB repetition on the non-anchor resource block set, as transmission power of L SSB repetitions of the non-anchor resource block set; or transmission power of the non-anchor resource block set is determined on the basis of a maximum transmission power of an SSB repetition on the non-anchor resource block set, and the transmission power of the non-anchor resource block set is equally allocated to L SSBs within the non-anchor resource block set.

In one embodiment, the determination of transmission power of an SSB repetition in a non-anchor resource block set within a specified range on the basis of power configuration parameters further includes: upon the condition that power control parameters are configured, transmission power of all non-anchor resource block sets is determined on the basis of the power control parameters, power control strategy and a maximum transmission power of SSB repetitions on all non-anchor resource block sets, and the transmission power on all non-anchor resource block sets is equally allocated, on the basis of all non-anchor resource block sets, to each non-anchor resource block set in all non-anchor resource block sets as transmission power of L SSBs of corresponding non-anchor resource block sets; or transmission power of all non-anchor resource block sets is determined on the basis of the power control parameters, power control strategy and a maximum transmission power of an SSB repetition on the non-anchor resource block set, and the transmission power of all non-anchor resource block sets is equally allocated to all SSB repetitions within all non-anchor resource block sets as transmission power of each SSB in each non-anchor resource block set in all non-anchor resource block sets.

In one embodiment, the determination of transmission power of an SSB repetition in a non-anchor resource block set within a specified range on the basis of power configuration parameters further includes: upon the condition that power control parameters are not configured, transmission power of all non-anchor resource block sets is determined on the basis of a maximum transmission power of SSB repetitions on all non-anchor resource block sets, and the transmission power on all non-anchor resource block sets is equally allocated, on the basis of all non-anchor resource block sets, to each non-anchor resource block set in all non-anchor resource block sets as transmission power of L SSBs of corresponding non-anchor resource block sets; or transmission power of all non-anchor resource block sets is determined on the basis of a maximum transmission power of an SSB repetition on the non-anchor resource block set, and the transmission power of all non-anchor resource block sets is equally allocated to all SSB repetitions within all non-anchor resource block sets as transmission power of each SSB in each non-anchor resource block set in all non-anchor resource block sets.

In one embodiment, the power configuration parameters includes at least one of the following: a maximum transmission power of a device, a maximum transmission power of an SSB and an SSB repetition on an anchor resource block set, maximum transmission power corresponding to each non-anchor resource block set in all non-anchor resource block sets within a specified range, maximum transmission power of SSB repetitions in all non-anchor resource block sets within a specified range, or maximum transmission power corresponding to each resource block set in the bandwidth part.

The determination of transmission power for an SSB and transmission power of an SSB repetition on an SSB slot on the basis of power configuration parameters includes: transmission power for an SSB and transmission power of an SSB repetition in an anchor resource block set and transmission power of an SSB repetition in a non-anchor resource block set are determined on the basis of power configuration parameters.

In one embodiment, the determination of transmission power for an SSB and transmission power of an SSB repetition on an SSB slot on the basis of power configuration parameters includes: upon the condition that power control parameters are configured, transmission power of L SSBs in an anchor resource block set is determined on the basis of the power control parameters, power control strategy and a maximum transmission power of the anchor resource block set, and transmission power of each non-anchor resource block set is determined on the basis of the power control parameters, power control strategy and maximum transmission power corresponding to each non-anchor resource block set within the specified range, as transmission power of L SSB repetitions in corresponding resource block sets; or transmission power of each resource block set is determined on the basis of the power control parameters, power control strategy and maximum transmission power corresponding to each resource block set in the bandwidth part, and the transmission power of each resource block set is equally allocated to L SSBs within corresponding resource block set.

In one embodiment, the determination of transmission power for an synchronization signal block (SSB) and transmission power of an SSB repetition on an SSB slot on the basis of power configuration parameters includes: upon the condition that power control parameters are not configured, transmission power of each resource block set is determined, on the basis of maximum transmission power corresponding to the anchor resource block set or each non-anchor resource block set within a specified range, as transmission power of L SSBs of corresponding resource block sets; or transmission power of each resource block set is determined, on the basis of maximum transmission power corresponding to the anchor resource block set or each non-anchor resource block set within a specified range, and transmission power of each resource block set is equally allocated to L SSBs within corresponding resource block set.

In one embodiment, the determination of transmission power for an SSB and transmission power of an SSB repetition on an SSB slot on the basis of power configuration parameters includes: upon the condition that power control parameters are configured, transmission power of an anchor resource block set is determined on the basis of the power control parameters, power control strategy and a maximum transmission power of the anchor resource block set, transmission power of all non-anchor resource block sets within a specified range is determined on the basis of the power control parameters, power control strategy and maximum transmission power corresponding to all non-anchor resource block sets within a specified range, the determined transmission power on an anchor resource block set is used as transmission power of L SSBs within the anchor resource block set, and transmission power of all non-anchor resource block sets within a specified range is equally allocated to each non-anchor resource block set in all non-anchor resource block sets within a specified range as transmission power of L SSB repetitions in each non-anchor resource block set on all non-anchor resource block sets within a specified range; or transmission power of an anchor resource block set is determined on the basis of the power control parameters, power control strategy and a maximum transmission power of the anchor resource block set, on the basis of the power control parameters, power control strategy and transmission power of all non-anchor resource block sets within a specified range, the determined transmission power on an anchor resource block set is equally allocated to L SSBs within the anchor resource block set, and transmission power of all non-anchor resource block sets within a specified range is equally allocated to all SSB repetitions on all non-anchor resource block sets within the specified range.

In one embodiment, the determination of transmission power for an SSB and transmission power of an SSB repetition on an SSB slot on the basis of power configuration parameters includes: upon the condition that power control parameters are not configured, transmission power of an anchor resource block set is determined on the basis of a maximum transmission power of the anchor resource block set, transmission power of all non-anchor resource block sets within a specified range is determined on the basis of maximum transmission power corresponding to all non-anchor resource block sets within a specified range, the determined transmission power on an anchor resource block set is used as transmission power of L SSBs within the anchor resource block set, and transmission power of all non-anchor resource block sets within a specified range is equally allocated to each non-anchor resource block set in all non-anchor resource block sets within a specified range as transmission power of L SSB repetitions in each non-anchor resource block set on all non-anchor resource block sets within a specified range; or transmission power of an anchor resource block set is determined on the basis of a maximum transmission power of the anchor resource block set, transmission power of all non-anchor resource block sets within a specified range is determined on the basis of maximum transmission power corresponding to all non-anchor resource block sets within a specified range, the determined transmission power on an anchor resource block set is equally allocated to L SSBs within the anchor resource block set, and transmission power of all non-anchor resource block sets within a specified range is equally allocated to all SSB repetitions on all non-anchor resource block sets within the specified range.

In one embodiment, the non-anchor resource block set within the specified range includes at least one of the following: a non-anchor resource block set within a bandwidth part, a non-anchor resource block set within a resource pool where channel occupancy time is located, a non-anchor resource block set within channel occupancy time or a non-anchor resource block set for which listen-before-talk (LBT) is successful that is contained within channel occupancy time, or an empty set.

In one embodiment, maximum transmission power corresponding to each resource block set in the bandwidth part satisfies at least one of the following: each resource block set corresponds to a maximum transmission power; an anchor resource block set corresponds to a first maximum transmission power, or a non-anchor resource block set corresponds to a second maximum transmission power; each resource block set corresponds to a third maximum transmission power; and each resource block set corresponds to a maximum transmission power of a device.

In one embodiment, the power configuration parameters include a maximum transmission power of a device; the determination of transmission power for an SSB and transmission power of an SSB repetition on an SSB slot on the basis of power configuration parameters includes: transmission power for an SSB and transmission power of an SSB repetition in each anchor resource block set is determined on the basis of power configuration parameters.

In one embodiment, the determination of transmission power for an SSB and transmission power of an SSB repetition in each anchor resource block set on the basis of power configuration parameters includes: upon the condition that power control parameters are configured, transmission power for an SSB and transmission power of an SSB repetition in each anchor resource block set is determined, on the basis of the power control parameters and power control strategy, as transmission power of L SSBs of corresponding anchor resource block set; or transmission power for an SSB and transmission power of an SSB repetition in each anchor resource block set is determined on the basis of the power control parameters and power control strategy, and transmission power of each resource block set is equally allocated to L SSBs within corresponding resource block set; wherein a sum of transmission power for an SSB and transmission power of an SSB repetition in an anchor resource block set does not exceed the maximum transmission power of the device.

In one embodiment, the determination of transmission power for an SSB and transmission power of an SSB repetition in each anchor resource block set on the basis of power configuration parameters includes: upon the condition that power control parameters are not configured, transmission power for an SSB and transmission power of an SSB repetition in each anchor resource block set is determined, on the basis of the maximum transmission power of the device, as transmission power of L SSBs of corresponding anchor resource block set; or transmission power for an SSB and transmission power of an SSB repetition in each anchor resource block set is determined on the basis of the maximum transmission power of the device, and transmission power of each resource block set is equally allocated to L SSBs within corresponding resource block set; wherein the resource block set is an anchor resource block set.

The power control parameters include target receive power, and the power control strategy includes, for example, a calculation formula for transmission power.

In one embodiment, the transmission of the SSB and the SSB repetition on a resource block set corresponding to the SSB slot on the basis of transmission power of the SSB and transmission power of the SSB repetition includes the following step 1210, step 1220 and step 1230.

Step 1210: upon the condition that a sum of transmission power for an SSB and transmission power of an SSB repetition in each anchor resource block set is greater than the maximum transmission power of the device, a corresponding SSB and SSB repetition are transmitted on the basis of transmission power for an SSB and transmission power of an SSB repetition corresponding to an anchor resource block set.

Step 1220: K non-anchor resource block sets are selected.

Step 1230: SSB repetitions corresponding to the K non-anchor resource block sets are transmitted on the basis of transmission power of SSB repetitions corresponding to the selected K non-anchor resource block sets; wherein a sum of transmission power of SSBs and SSB repetitions in the anchor resource block set and transmission power of SSBs and SSB repetitions corresponding to the K non-anchor resource block sets does not exceed the maximum transmission power of the device.

In one embodiment, selecting K non-anchor resource block sets includes one of the following: starting from the anchor resource block set, K non-anchor resource block sets are selected in order of increasing resource block set indices; starting from the anchor resource block set, K non-anchor resource block sets are selected in order of decreasing resource block set indices; starting from the anchor resource block set, K non-anchor resource block sets are selected alternately in order of decreasing resource block set indices by 1 and increasing resource block set indices by 1; starting from the anchor resource block set, K non-anchor resource block sets are selected alternately in order of increasing resource block set indices by 1 and decreasing resource block set indices by 1; starting from a position of a resource block set with a smallest index among resource block sets contained in channel occupancy time, K non-anchor resource block sets are selected in order of increasing resource block set indices; starting from a position of a resource block set with a largest index among resource block sets contained in channel occupancy time, K non-anchor resource block sets are selected in order of decreasing resource block set indices; starting from a position of a resource block set with a smallest index among resource block sets contained in channel occupancy time, K non-anchor resource block sets are selected in order of increasing resource block set indices; or K frequency-domain contiguous non-anchor resource block sets from resource block sets contained in channel occupancy time are selected.

In one embodiment, a communication node that transmits an SSB repetition on a non-anchor resource block set on the SSB time slot is either an initiating node of channel occupancy time or a responding node that uses the channel occupancy time after the SSB time slot.

In one embodiment, transmission power of SSBs within a single resource block set is the same.

The SSB transmission method will be exemplarily described with reference to embodiments below.

In embodiments of the present application, the term "Gap" refers to the frequency-domain distance between any two adjacent SSBs among the L SSBs within any RB Set, the frequency-domain distance may be defined as the distance between an end position of an SSB and a start position of an adjacent SSB, and the unit of the Gap is one PRB or RB.

Anchor SSB refers to the SSB determined by high-layer ARFCN parameters. Anchor RB Set refers to the RB Set where the Anchor SSB is located.

Embodiment 1

A corresponding maximum transmission power $P_{CMAX\_anchor}$ is set for the Anchor RB Set, and the remaining power is allocated equally for other non-Anchor RB Sets within the specified range. The specified range may be a bandwidth part (BWP), a resource pool where a channel occupancy time (COT) is located, channel occupancy time, or a resource block set for listen-before-talk (LBT is successful) contained in the channel occupancy time. In some embodiments, BWP is used as an example for illustration.

One RB set can transmit at least two SSBs, for an anchor RB set, one anchor SSB and at least one SSB repetition can be transmitted, for a non-anchor RB set, at least two SSB repetitions can be transmitted.

It should be noted that the number of RB Sets used for calculating transmission power of an SSB is not directly related to the actual number of RB Sets transmitted by the device on the SSB Slot. The number of RB Sets actually transmitted is determined by RB Sets included in the COT in the resource pool and the LBT result on the SSB Slot, and may be equal to or less than the number of RB Sets used to calculate transmission power of an SSB.

In this embodiment, the power configuration parameters include a maximum power of a device $P_{CMAX}$ and a maximum transmission power of an anchor RB Set $P_{CMAX\_anchor}$. The determination of transmission power for an SSB and transmission power of an SSB repetition on an SSB slot on the basis of power configuration parameters includes: transmission power of an anchor resource block set is determined on the basis of $P_{CMAX}$ and $P_{CMAX\_anchor}$, the transmission power of an anchor resource block set includes transmission power of an SSB and transmission power of an SSB repetition in the anchor resource block set, and a sum of transmission power of an SSB and transmission power of an SSB repetition in the anchor resource block set does not exceed $P_{CMAX\_anchor}$; a maximum transmission power of SSB repetitions on each non-anchor resource block set within a specified range is determined on the basis of $P_{CMAX}$ and $P_{CMAX\_anchor}$, and the determination of maximum transmission power of SSB repetitions on each non-anchor resource block set within a specified range includes equally allocating the remaining power headroom to SSB repetitions corresponding to non-anchor resource block sets within a specified range, wherein the remaining power headroom is a difference between $P_{CMAX} \overline{\overline{\phantom{=}}} P_{CMAX\_anchor}$; transmission power of the non-anchor resource block set is determined on the basis of a maximum transmission power of an SSB repetition on the non-anchor resource block set.

In this embodiment, the power control parameter may refer to target receive power $P_{O,S-SSB}$, and the power control strategy may refer to a calculation formula for transmission power, including the function min(,) for taking a minimum value.

Example 1

The transmission power of each SSB on each RB Set is determined, which is equivalent to the case where Gap > 0.

The transmission power of the Anchor SSB on the Anchor RB Set may be determined according to the following formula:

$$P_{anchor\_S-SSB}(i) = \min\left(P_{CMAX\_anchor}, P_{O,S-SSB} + 10\log_{10}\left(2^{\mu} \cdot L \cdot M_{RB}^{S-SSB}\right) + \alpha_{S-SSB} \cdot PL\right) - 10\log_{10}(L) \ [dBm]$$

or

$$P_{anchor\_S-SSB}(i) = \min$$
$$\left(P_{CMAX\_anchor} - 10\log_{10}(L), P_{O,S-SSB} + 10\log_{10}\left(2^{\mu} \cdot M_{RB}^{S-SSB}\right) + \alpha_{S-SSB} \cdot PL\right) \ [dBm]$$

or the result $P_{anchor\_S-SSB}(i)$ obtained from the above formula is denoted as $P_{anchor\_S-SSB}(i)'$:

$$P_{anchor\_S-SSB}(i) = \min(P_{CMAX} - 10\log_{10}(L), P_{anchor\_S-SSB}(i)')$$

or

$$P_{anchor\_S-SSB}(i) = \min(P_{CMAX}, P_{anchor\_S-SSB}(i)')$$

wherein i represents the slot index of the time domain.

The transmission power of an SSB repetition on the Anchor RB Set is the same as the transmission power of an Anchor SSB on the Anchor RB Set.

The transmission power of each SSB repetition on the non-Anchor RB Set may be determined according to the following formula:

$$P_{non-anchor\_S-SSB}(i) =$$
$$\min(P_{CMAX} - P_{CMAX\_anchor} - 10\log_{10}(N-1), P_{O,S-SSB} + 10\log_{10}(2^{\mu} \cdot L \cdot M_{RB}^{S-SSB}) + \alpha_{S-SSB} \cdot PL) - 10\log_{10}(L) \ [dBm]$$

or: $P_{non-anchor\_S-SSB}(i) =$
$$\min$$
$$\left(P_{CMAX} - P_{CMAX\_anchor} - 10\log_{10}(N-1) - 10\log_{10}(L), P_{O,S-SSB} + 10\log_{10}\left(2^{\mu} \cdot M_{RB}^{S-SSB}\right) + \alpha_{S-SSB} \cdot PL\right) \ [dBm]$$

or: $P_{non-anchor\_S-SSB}(i) =$
$$\min(P_{CMAX} - P_{anchor\_S-SSB\_all} - 10\log_{10}(N-1), P_{O,S-SSB} + 10\log_{10}(2^{\mu} \cdot L \cdot M_{RB}^{S-SSB}) + \alpha_{S-SSB} \cdot PL) - 10\log_{10}(L) \ [dBm]$$

or: $P_{non\text{-}anchor\_S\text{-}SSB}(i) =$

$min$

$$\left(P_{CMAX} - P_{anchor\_S\text{-}SSB\_all} - 10\log_{10}(N-1) - 10\log_{10}(L), P_{O,S\text{-}SSB} + 10\log_{10}\left(2^{\mu} \cdot M_{RB}^{S\text{-}SSB}\right) + \alpha_{S\text{-}SSB} \cdot PL\right)$$
[dBm]

wherein L is the number of SSBs within the RB Set. N is the number of RB Sets included in the SL BWP (the specified range is taken as BWP as an example).

Example 2

L SSBs on an RB Set are taken as a whole to determine transmission power of an SSB, which is equivalent to the case where Gap > 0.

For the transmission power of all of L SSBs on the Anchor RB Set:

$$P_{anchor\_S\text{-}SSB\_all}(i) = min\left(P_{CMAX\_anchor}, P_{O,S\text{-}SSB} + 10\log_{10}\left(2^{\mu} \cdot L \cdot M_{RB}^{S\text{-}SSB}\right) + \alpha_{S\text{-}SSB} \cdot PL\right)$$

[dBm]

or

$$P_{anchor\_S\text{-}SSB\_all}(i) = min$$
$$\left(P_{CMAX}, P_{CMAX\_anchor}, P_{O,S\text{-}SSB} + 10\log_{10}\left(2^{\mu} \cdot L \cdot M_{RB}^{S\text{-}SSB}\right) + \alpha_{S\text{-}SSB} \cdot PL\right) \text{ [dBm]}$$

For the transmission power of an SSB repetition on the non-Anchor RB Set: $P_{non\text{-}anchor\_S\text{-}SSB\_all}$

$(i) =$

$min$

$$\left(P_{CMAX} - P_{CMAX\_anchor} - 10\log_{10}(N-1), P_{O,S\text{-}SSB} + 10\log_{10}\left(2^{\mu} \cdot L \cdot M_{RB}^{S\text{-}SSB}\right) + \alpha_{S\text{-}SSB} \cdot PL\right)$$

or: $P_{non\text{-}anchor\_S\text{-}SSB\_all}(i) =$

$min$

$$\left(P_{CMAX} - P_{anchor\_S\text{-}SSB\_all} - 10\log_{10}(N-1), P_{O,S\text{-}SSB} + 10\log_{10}\left(2^{\mu} \cdot L \cdot M_{RB}^{S\text{-}SSB}\right) + \alpha_{S\text{-}SSB} \cdot PL\right)$$

wherein L is the number of SSBs within the RB Set. N is the number of RB Sets included in the SL BWP (the specified range is taken as BWP as an example).

Embodiment 2

In this embodiment, each RB Set is configured with its own maximum transmission power.

In this embodiment, the power configuration parameters include the maximum transmission power of the device $P_{CMAX}$ and the maximum transmission power corresponding to each resource block set within the bandwidth part $P_{CMAX\_j}$.

The determination of transmission power for an SSB and transmission power of an SSB repetition on an SSB slot on the basis of power configuration parameters includes: transmission power for an SSB and transmission power of an SSB repetition in each resource block set within the bandwidth part are determined on the basis of $P_{CMAX}$ and $P_{CMAX\_j}$, a sum of transmission power for an SSB and transmission power of an SSB repetition in a single resource block set does not exceed the maximum transmission power of the resource block set.

In this embodiment, after transmission power of all RB Sets is calculated, the total power when transmitting an SSB or an SSB repetition may exceed $P_{CMAX}$, in this case, a subset of RB Sets may be selected based on actual transmission conditions to ensure that the final total power does not exceed $P_{CMAX}$.

In this embodiment, the power control parameter may refer to target receive power $P_{O,S\text{-}SSB}$, and the power control strategy may refer to a calculation formula for transmission power, including the function min(,) for taking a minimum value.

Assume that the SL BWP includes five RB Sets, namely RB Set 1, RB Set 2, RB Set 3, RB Set 4, and RB Set 5, wherein the Anchor RB Set is RB Set 1, each of these five RB Sets is configured with its own maximum transmission power, that is:

the maximum transmission power of RB Set 1 is $P_{CMAX\_1}$, the maximum transmission power of RB Set 2 is $P_{CMAX\_2}$, the maximum transmission power of RB Set 3 is $P_{CMAX\_3}$, the maximum transmission power of RB Set 4 is $P_{CMAX\_4}$, and the maximum transmission power of RB Set 5 is $P_{CMAX\_5}$.

Example 1

The transmission power of each SSB on each RB Set is determined, which is equivalent to the case where Gap > 0.

$$P_{S\text{-}SSB}(i, j) = \min\left(P_{CMAX\_j}, P_{O,S\text{-}SSB} + 10\log_{10}\left(2^\mu \cdot L \cdot M_{RB}^{S\text{-}SSB}\right) + \alpha_{S\text{-}SSB} \cdot PL\right) - 10\log_{10}(L)$$

[dBm]

or the result $P_{S\text{-}SSB}(i, j)$ obtained from the above formula is denoted as $P_{S\text{-}SSB}(i, j)'$, then

$$P_{S\text{-}SSB}(i, j) = \min\left(P_{CMAX} - 10\log_{10}(L), P_{S\text{-}SSB}(i, j)'\right) \text{ [dBm]}$$

where j is the index of the RB Set, ranging from 1 to N, N is the number of RB Sets included in the SL BWP, L is the number of SSBs within an RB Set, and $P_{CMAX\_j}$ is the configured maximum transmission power for RB Set j.

Example 2

L SSBs on an RB Set are taken as a whole to determine transmission power of an SSB, which is equivalent to the case where Gap > 0.

$$P_{S\text{-}SSB\_all}(i, j) = \min\left(P_{CMAX\_j}, P_{O,S\text{-}SSB} + 10\log_{10}\left(2^\mu \cdot L \cdot M_{RB}^{S\text{-}SSB}\right) + \alpha_{S\text{-}SSB} \cdot PL\right) \text{ [dBm]}$$

or the result $P_{S\text{-}SSB\_all}(i, j)$ obtained from the above formula is denoted as $P_{S\text{-}SSB\_all}(i, j)'$, then

$$P_{S\text{-}SSB\_all}(i, j) = \min(P_{CMAX}, P_{S\text{-}SSB\_all}(i, j)') \text{ [dBm]}$$

where i is the index of the Slot, j ranges from 1 to N, N is the number of RB Sets included in the SL BWP, L is the number of SSBs within an RB Set, and $P_{CMAX\_j}$ is the configured maximum transmission power for RB Set j.

Example 3

The maximum transmission power for each RB Set is a same maximum transmission power, that is, each resource block set corresponds to a third maximum transmission power (denoted as $P_{CMAX\_RBSet}$).

For the case where Gap = 0, assuming that the maximum transmission power configured on each RB Set is $P_{CMAX\_RBSet}$, the transmission power of L SSBs on RB Set j is:

$$P_{S\text{-}SSB\_all}(i, j) = \min\left(P_{CMAX\_RBSet}, P_{O,S\text{-}SSB} + 10\log_{10}\left(2^\mu \cdot L \cdot M_{RB}^{S\text{-}SSB}\right) + \alpha_{S\text{-}SSB} \cdot PL\right) \text{ [dBm]}$$

or the result $P_{S\text{-}SSB\_all}(i, j)$ obtained from the above formula is denoted as $P_{S\text{-}SSB}(i, j)'$, then

$$P_{\text{S-SSB\_all}}(i, j) = \min(P_{\text{CMAX}}, P_{\text{S-SSB}}(i, j)') \; [\text{dBm}]$$

In an example, for the case where Gap > 0, assuming that the maximum transmission power configured on each RB Set is $P_{\text{CMAX\_RBSet}}$, the transmission power of L SSBs on RB Set j is:

$$P_{\text{S-SSB}}(i, j) = \min\left(P_{\text{CMAX\_RBSet}}, P_{\text{O,S-SSB}} + 10 \log_{10}\left(2^{\mu} \cdot L \cdot M_{\text{RB}}^{\text{S-SSB}}\right) + \alpha_{\text{S-SSB}} \cdot \text{PL}\right) - 10 \log_{10}(L) \; [\text{dBm}]$$

or

$$P_{\text{S-SSB}}(i, j) = \min\left(P_{\text{CMAX\_RBSet}} - 10 \log_{10}(L), P_{\text{O,S-SSB}} + 10 \log_{10}\left(2^{\mu} \cdot M_{\text{RB}}^{\text{S-SSB}}\right) + \alpha_{\text{S-SSB}} \cdot \text{PL}\right) \; [\text{dBm}]$$

or the result $P_{\text{S-SSB}}(i, j)$ obtained from the above formula is denoted as $P_{\text{S-SSB}}(i, j)'$, then $P_{\text{S-SSB}}(i, j) = \min(P_{\text{CMAX}}, P_{\text{S-SSB}}(i, j)')$ [dBm].

When sum $(P_{\text{S-SSB}}(i, j)0 > P_{\text{CMAX}}$, the device prioritizes the transmission power of an SSB on the Anchor RB Set; furthermore, K non-Anchor RB Sets are selected from the remaining non-Anchor RB Sets to transmit an SSB, $K \leq N-1$, $K \geq 0$, until sum $(P_{\text{S-SSB}}(i, j)) \leq P_{\text{CMAX}}$. sum denotes the summation function.

The method for selecting K non-Anchor RB Sets includes:

starting from the Anchor RB Set, K Non-Anchor RB Sets are selected in order of increasing RB Set indices; or starting from the Anchor RB Set, K Non-Anchor RB Sets are selected in order of decreasing RB Set indices; or starting from the Anchor RB Set, K Non-Anchor RB Sets are selected alternately in order of decreasing RB Set indices by 1 and increasing RB Set indices by 1; or starting from the Anchor RB Set, K Non-Anchor RB Sets are selected alternately in order of increasing RB Set indices by 1 and decreasing RB Set indices by 1; or on the basis of positions of RB Sets included in the COT, priority is given to selecting K non-Anchor RB Sets sequentially from the positions of RB Sets within the COT until the upper limit requirement of power is satisfied. For example, starting from the position of an RB Set with a smallest index among the RB Sets included in the COT, K non-Anchor RB Sets are selected in order of increasing resource block set indices; or starting from the position of an RB Set with a largest index among the RB Sets included in the COT, K non-Anchor RB Sets are selected in order of decreasing resource block set indices. Or starting from the position of an RB Set with a smallest index among the RB Sets included in the COT, K non-Anchor RB Sets are selected in order of increasing resource block set indices.

Alternatively, K frequency-domain continuous non-anchor RB Sets of the RB Sets included in the COT are selected.

Example 4

Two types of maximum transmission powers are configured, that is, the maximum transmission power $P_{\text{CMAX\_achor}}$ (that is, the first maximum transmission power) is configured for the Anchor RB Set, and the maximum transmission power of other non-Anchor RB Sets is configured as $P_{\text{CMAX\_non-achor}}$ (that is, the second maximum transmission power).

For the transmission power of the Anchor SSB on the Anchor RB Set, for the case where Gap>0:

$$P_{\text{anchor\_S-SSB}}(i) = \min\left(P_{\text{CMAX\_anchor}}, P_{\text{O,S-SSB}} + 10 \log_{10}\left(2^{\mu} \cdot L \cdot M_{\text{RB}}^{\text{S-SSB}}\right) + \alpha_{\text{S-SSB}} \cdot \text{PL}\right) - 10 \log_{10}(L) \; [\text{dBm}]$$

or

$$P_{anchor\_S\text{-}SSB}(i)$$
$$= \min\left(P_{CMAX}, P_{CMAX\_anchor}, P_{O,S\text{-}SSB} + 10\log_{10}\left(2^\mu \cdot L \cdot M_{RB}^{S\text{-}SSB}\right) + \alpha_{S\text{-}SSB} \cdot PL\right)$$
$$-10\log_{10}(L) \ [dBm]$$

or

$$P_{anchor\_S\text{-}SSB}(i) = \min$$
$$\left(P_{CMAX\_anchor} - 10\log_{10}(L), P_{O,S\text{-}SSB} + 10\log_{10}\left(2^\mu \cdot M_{RB}^{S\text{-}SSB}\right) + \alpha_{S\text{-}SSB} \cdot PL\right) \ [dBm]$$

or

$$P_{anchor\_S\text{-}SSB}(i) = \min\left(\begin{array}{c} P_{CMAX} - 10\log_{10}(L), P_{CMAX\_anchor} - 10\log_{10}(L), \\ P_{O,S\text{-}SSB} + 10\log_{10}\left(2^\mu \cdot M_{RB}^{S\text{-}SSB}\right) + \alpha_{S\text{-}SSB} \cdot PL \end{array}\right) \ [dBm]$$

The transmission power of an SSB repetition on the Anchor RB Set is the same as the transmission power of an Anchor SSB on the Anchor RB Set.

The transmission power of each SSB repetition on other non-Anchor RB Sets is:

$$P_{non\text{-}anchor\_S\text{-}SSB}(i) = \min\left(P_{CMAX\_non\text{-}achor}, P_{O,S\text{-}SSB} + 10\log_{10}\left(2^\mu \cdot L \cdot M_{RB}^{S\text{-}SSB}\right) + \alpha_{S\text{-}SSB} \cdot PL\right)$$
$$-10\log_{10}(L) \ [dBm]$$

or

$$P_{non\text{-}anchor\_S\text{-}SSB}(i)$$
$$= \min\Big($$
$$P_{CMAX}, P_{CMAX\_non\text{-}achor}, P_{O,S\text{-}SSB} + 10\log_{10}\left(2^\mu \cdot L \cdot M_{RB}^{S\text{-}SSB}\right) + \alpha_{S\text{-}SSB} \cdot PL\Big)$$
$$-10\log_{10}(L) \ [dBm]$$

or

$$P_{non\text{-}anchor\_S\text{-}SSB}(i) = \min$$
$$\left(P_{CMAX\_non\text{-}achor} - 10\log_{10}(L), P_{O,S\text{-}SSB} + 10\log_{10}\left(2^\mu \cdot M_{RB}^{S\text{-}SSB}\right) + \alpha_{S\text{-}SSB} \cdot PL\right) \ [dBm]$$

or

$$P_{non\text{-}anchor\_S\text{-}SSB}(i) = \min\left(\begin{array}{c} P_{CMAX} - 10\log_{10}(L), P_{CMAX\_non\text{-}achor} - 10\log_{10}(L), \\ P_{O,S\text{-}SSB} + 10\log_{10}\left(2^\mu \cdot M_{RB}^{S\text{-}SSB}\right) + \alpha_{S\text{-}SSB} \cdot PL \end{array}\right) \ [dBm]$$

wherein L is the number of SSBs within the RB Set. N is the number of RB Sets included in the SL BWP.

In one example, for the case where Gap=0, two additional types of maximum transmission powers are configured, that is, the maximum transmission power $P_{CMAX\_achor}$ is configured for the Anchor RB Set, and the maximum transmission power of other non-Anchor RB Sets is configured as $P_{CMAX\_non\text{-}achor}$, L SSBs on an RB Set are taken as a whole to determine transmission power of an SSB.

For the transmission power of the Anchor SSB on the Anchor RB Set:

$$P_{anchor\_S\text{-}SSB\_all}(i) = \min\left(P_{CMAX\_anchor}, P_{O,S\text{-}SSB} + 10\log_{10}\left(2^\mu \cdot L \cdot M_{RB}^{S\text{-}SSB}\right) + \alpha_{S\text{-}SSB} \cdot PL\right)$$
$$[dBm]$$

or the result $P_{anchor\_S\text{-}SSB\_all}(i)$ obtained from the above formula is denoted as $P_{anchor\_S\text{-}SSB\_all}(i)'$ , then

$$P_{anchor\_S\text{-}SSB\_all}(i) = \min\left(P_{CMAX}, P_{anchor\_S\text{-}SSB\_all}(i)'\right) \ [dBm]$$

The transmission power of an SSB repetition on the Anchor RB Set is the same as the transmission power of an Anchor SSB on the Anchor RB Set.

The transmission power of an SSB repetition on other non-Anchor RB Sets is:

$$P_{non\text{-}anchor\_S\text{-}SSB\_all}(i) = \min$$
$$\left(P_{CMAX\_non\text{-}achor}, P_{O,S\text{-}SSB} + 10\log_{10}\left(2^\mu \cdot L \cdot M_{RB}^{S\text{-}SSB}\right) + \alpha_{S\text{-}SSB} \cdot PL\right) \ [dBm]$$

or the result $p_{non\text{-}anchor\_S\text{-}SSB\_all}(i)$ obtained from the above formula is denoted as $P_{non\text{-}anchor\_S\text{-}SSB\_all}(i)'$ ' then

$$P_{non\text{-}anchor\_S\text{-}SSB\_all}(i) = \min\left(P_{CMAX}, P_{non\text{-}anchor\_S\text{-}SSB\_all}(i)'\right) \ [dBm]$$

wherein L is the number of SSBs within the RB Set.

In one example, the transmission transmit power is not set for each RB Set, and only the maximum transmission power configured by the higher layer $P_{CMAX}$ is considered. If the power control parameter (that is, the target receive power, $P_{O,S\text{-}SSB}$ ) is provided, the transmission power of each SSB on each RB Set is:

$$P_{S\text{-}SSB}(i) = P_{O,S\text{-}SSB} + 10\log_{10}\left(2^\mu \cdot M_{RB}^{S\text{-}SSB}\right) + \alpha_{S\text{-}SSB} \cdot PL \ [dBm]$$

Furthermore, for the Anchor RB Set, if $P_{S\text{-}SSB}(i) + 10\log_{10}(L)$ exceeds $P_{CMAX}$, then the transmission power of SSB on the anchor RB set is $P_{S\text{-}SSB}(i) = P_{CMAX} - 10\log_{10}(L)$ [dBm]

Further, if the sum of power of SSBs actually transmitted on the Anchor RB Set and power of SSBs actually transmitted on the non-anchor RB Set exceeds $P_{CMAX}$, then starting from the Anchor RB Set, SSBs on other Rb Sets may be selected sequentially according to the order of the RB Sets until the sum of transmission power of SSBs on the total number of selected RB Sets does not exceed $P_{CMAX}$. The method for selecting an RB Set may refer to the method for selecting K non-anchor RB Sets described in any of the above embodiments.

If $P_{O,S\text{-}SSB}$ is not provided, taking Gap > 0 as an example, the transmission power of each SSB on each RB Set is: $P_{S\text{-}SSB}(i) = P_{CMAX} - 10\log_{10}(L)$ [dBm]

And it can only be transmitted on the Anchor RB Set.

Embodiment 3

In this embodiment, the specified range is the resource pool where the COT is located. A maximum transmission power $P_{CMAX\_anchor}$ is set for an Anchor RB Set, and the remaining power is allocated equally for other non-Anchor RB Sets included in the resource pool where other COTs are located.

It should be noted that the number of RB sets used for calculating transmission power of an SSB is not directly related to the actual number of RB sets transmitted by the device on the SSB slot. The number of RB sets actually transmitted is determined by RB sets included in the COT in the resource pool and the LBT result on the SSB slot, and may be equal to or less than the number of RB sets used to calculate transmission power of an SSB.

In this embodiment, the power control parameter may refer to target receive power $P_{O,S\text{-}SSB}$, and the power control strategy may refer to a calculation formula for transmission power, including the function min(,) for taking a minimum value.

FIG. 5 is a schematic diagram of a resource pool where a COT is located provided in an embodiment. As shown in FIG. 5, the device transmits an SSB and an SSB repetition in the time slot before an SSB slot, SSBs and SSB repetitions are located in resource pool 1, and resource pool 1 includes 3 RB Sets.

Example 1

For the case where Gap > 0, the transmission power of each SSB on each RB Set is determined. For the transmission power of an SSB on the Anchor RB Set:

$$P_{anchor\_S\text{-}SSB}(i) = \min\left(P_{CMAX\_anchor}, P_{O,S\text{-}SSB} + 10\log_{10}\left(2^{\mu} \cdot L \cdot M_{RB}^{S\text{-}SSB}\right) + \alpha_{S\text{-}SSB} \cdot PL\right) - 10\log_{10}(L) \; [dBm]$$

or

$$P_{anchor\_S\text{-}SSB}(i) = \min\left(P_{CMAX\_anchor} - 10\log_{10}(L), P_{O,S\text{-}SSB} + 10\log_{10}\left(2^{\mu} \cdot M_{RB}^{S\text{-}SSB}\right) + \alpha_{S\text{-}SSB} \cdot PL\right) \; [dBm]$$

or

$$P_{anchor\_S\text{-}SSB}(i) = \min\left(P_{CMAX}, P_{CMAX\_anchor}, P_{O,S\text{-}SSB} + 10\log_{10}\left(2^{\mu} \cdot L \cdot M_{RB}^{S\text{-}SSB}\right) + \alpha_{S\text{-}SSB} \cdot PL\right) - 10\log_{10}(L) \; [dBm]$$

or

$$P_{anchor\_S\text{-}SSB}(i) = \min\left(\begin{array}{c} P_{CMAX} - 10\log_{10}(L), P_{CMAX\_anchor} - 10\log_{10}(L), \\ P_{O,S\text{-}SSB} + 10\log_{10}\left(2^{\mu} \cdot M_{RB}^{S\text{-}SSB}\right) + \alpha_{S\text{-}SSB} \cdot PL \end{array}\right) \; [dBm]$$

The transmission power of an SSB repetition on the Anchor RB Set is the same as the transmission power of an Anchor SSB on the Anchor RB Set.

For the transmission power of an SSB repetition on the non-Anchor RB Set,

$$P_{non\text{-}anchor\_S\text{-}SSB}(i) = \min(P_{CMAX} - P_{CMAX\_anchor} - 10\log_{10}(N_{RP\_non\text{-}anchor}),$$

$$P_{O,S\text{-}SSB} + 10\log_{10}\left(2^{\mu} \cdot L \cdot M_{RB}^{S\text{-}SSB}\right) + \alpha_{S\text{-}SSB} \cdot PL) - 10\log_{10}(L)$$

or

$$P_{non\text{-}anchor\_S\text{-}SSB}(i) = \min(P_{CMAX} - P_{CMAX\_anchor} - 10\log_{10}(N_{RP\_non\text{-}anchor}) - 10\log_{10}(L),$$

$$P_{O,S\text{-}SSB} + 10\log_{10}\left(2^{\mu} \cdot M_{RB}^{S\text{-}SSB}\right) + \alpha_{S\text{-}SSB} \cdot PL)$$

wherein L is the number of SSBs within the RB Set. $N_{RP\_non\text{-}anchor}$ is the number of non-anchor RB Sets in resource pool 1, in the example of FIG. 5, the value of $N_{RP\_non\text{-}anchor}$ is 2.

The transmission power of each SSB of L SSBs within the non-Anchor RB Set is the same.

Example 2:

L SSBs on an RB Set are taken as a whole to determine transmission power of an SSB, which is equivalent to the case where Gap > 0.

For the transmission power of an SSB on the Anchor RB Set:

$$P_{anchor\_S\text{-}SSB\_all}(i) = \min\left(P_{CMAX\_anchor}, P_{O,S\text{-}SSB} + 10\log_{10}\left(2^{\mu} \cdot L \cdot M_{RB}^{S\text{-}SSB}\right) + \alpha_{S\text{-}SSB} \cdot PL\right)$$

[dBm]

or

$$P_{anchor\_S\text{-}SSB\_all}(i) = \min$$
$$\left(P_{CMAX}, P_{CMAX\_anchor}, P_{O,S\text{-}SSB} + 10\log_{10}\left(2^{\mu} \cdot L \cdot M_{RB}^{S\text{-}SSB}\right) + \alpha_{S\text{-}SSB} \cdot PL\right) \text{ [dBm]}$$

For the transmission power of an SSB repetition on the non-Anchor RB Set:

$$P_{non\text{-}anchor\_S\text{-}SSB\_all}(i) = \min(P_{CMAX} - P_{CMAX\_anchor} - 10\log_{10}(N_{RP\_non\text{-}anchor}),$$

$$P_{O,S\text{-}SSB} + 10\log_{10}\left(2^{\mu} \cdot L \cdot M_{RB}^{S\text{-}SSB}\right) + \alpha_{S\text{-}SSB} \cdot PL)$$

Embodiment 4

In this embodiment, the specified range is COT. A maximum transmission power $P_{CMAXanchor}$ is set for an Anchor RB Set, and the remaining power is allocated equally for other non-Anchor RB Sets included in COT.

In this embodiment, the power control parameter may refer to target receive power $P_{O,S\text{-}SSB}$, and the power control strategy may refer to a calculation formula for transmission power, including the function min(,) for taking a minimum value.

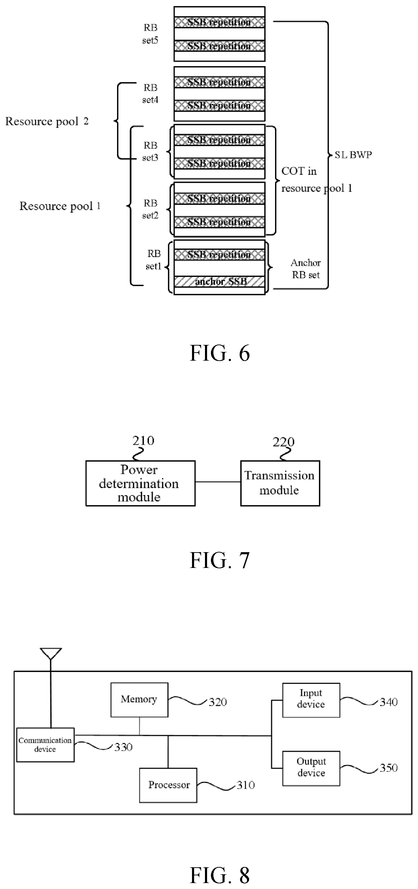

FIG. 6 is a schematic diagram of a channel occupancy time provided in an embodiment. As shown in FIG. 6, before the SSB Slot, the COT of the device occupies a total of two RB Sets, RB Set 2 and RB Set 3, in resource pool 1. At this point, channel maintenance during the SSB Slot is primarily performed on RB Set 2 and RB Set 3, while RB Set 1 is mainly used for synchronization, and no SSB repetitions will be transmitted on RB Set 4 and RB Set 5.

Example 1

The transmission power of each SSB on each RB Set is determined, which is equivalent to the case where Gap>0.

For the transmission power of an SSB on the Anchor RB Set:

$$P_{anchor\_S\text{-}SSB}(i) = \min\left(P_{CMAX\_anchor}, P_{O,S\text{-}SSB} + 10\log_{10}\left(2^{\mu} \cdot L \cdot M_{RB}^{S\text{-}SSB}\right) + \alpha_{S\text{-}SSB} \cdot PL\right) - 10\log_{10}(L) \text{ [dBm]}$$

or

$$P_{anchor\_S\text{-}SSB}(i) = \min$$
$$\left(P_{CMAX\_anchor} - 10\log_{10}(L), P_{O,S\text{-}SSB} + 10\log_{10}\left(2^{\mu} \cdot M_{RB}^{S\text{-}SSB}\right) + \alpha_{S\text{-}SSB} \cdot PL\right) \text{ [dBm]}$$

or

$$P_{anchor\_S\text{-}SSB}(i)$$
$$= \min\left(P_{CMAX}, P_{CMAX\_anchor}, P_{O,S\text{-}SSB} + 10\log_{10}\left(2^{\mu} \cdot L \cdot M_{RB}^{S\text{-}SSB}\right) + \alpha_{S\text{-}SSB} \cdot PL\right)$$
$$- 10\log_{10}(L) \text{ [dBm]}$$

or

$$P_{anchor\_S\text{-}SSB}(i) = \min\left(\begin{array}{c} P_{CMAX} - 10\log_{10}(L)\,,\, P_{CMAX\_anchor} - 10\log_{10}(L)\,, \\ P_{O,S\text{-}SSB} + 10\log_{10}\left(2^{\mu} \cdot M_{RB}^{S\text{-}SSB}\right) + \alpha_{S\text{-}SSB} \cdot PL \end{array}\right) \; [dBm]$$

The transmission power of an SSB repetition on the Anchor RB Set is the same as the transmission power of an Anchor SSB on the Anchor RB Set.

For the transmission power of an SSB repetition on the non-Anchor RB Set:

$$P_{non\text{-}anchor\_S\text{-}SSB}(i) = \min(P_{CMAX} - P_{CMAX\_anchor} - 10\log_{10}(N_{COT\_non\text{-}anchor}),$$

$$P_{O,S\text{-}SSB} + 10\log_{10}\left(2^{\mu} \cdot L \cdot M_{RB}^{S\text{-}SSB}\right) + \alpha_{S\text{-}SSB} \cdot PL) - 10\log_{10}(L)$$

or $$P_{non\text{-}anchor\_S\text{-}SSB}(i) = \min(P_{CMAX} - P_{CMAX\_anchor} - 10\log_{10}(N_{COT\_non\text{-}anchor}) - 10\log_{10}(L),$$

$$P_{O,S\text{-}SSB} + 10\log_{10}\left(2^{\mu} \cdot M_{RB}^{S\text{-}SSB}\right) + \alpha_{S\text{-}SSB} \cdot PL)$$

L is the number of SSBs within the RB Set. $N_{COT\_non\text{-}anchor}$ is the number of non-anchor RB Sets included in the COT occupied by the device, in the example of FIG. 6, the value of $N_{COT\_non\text{-}anchor}$ is 2.

The transmission power of each SSB on the non-Anchor RB Set is the same.

Example 2

L SSBs on an RB Set are taken as a whole to determine transmission power of an SSB, which is equivalent to the case where Gap > 0.

For the transmission power of an SSB on the Anchor RB Set:

$$P_{anchor\_S\text{-}SSB\_all}(i) = \min\left(P_{CMAX\_anchor}, P_{O,S\text{-}SSB} + 10\log_{10}\left(2^{\mu} \cdot L \cdot M_{RB}^{S\text{-}SSB}\right) + \alpha_{S\text{-}SSB} \cdot PL\right)$$

$$[dBm]$$

For the transmission power of an SSB repetition on the non-Anchor RB Set:

$$P_{non\text{-}anchor\_S\text{-}SSB\_all}(i) = \min(P_{CMAX} - P_{CMAX\_anchor} - 10\log_{10}(N_{COT\_non\text{-}anchor}),$$

$$P_{O,S\text{-}SSB} + 10\log_{10}\left(2^{\mu} \cdot L \cdot M_{RB}^{S\text{-}SSB}\right) + \alpha_{S\text{-}SSB} \cdot PL)$$

Embodiment 5

In this embodiment, the specified range is the resource block set with successful LBT in the COT. A maximum transmission power $P_{CMAX\_anchor}$ is set for an Anchor RB Set, and the remaining power is allocated equally for non-Anchor RB Sets among other non-Anchor RB Sets included in the COT that have successful LBT.

In this embodiment, the power control parameter may refer to target receive power $P_{O,S\text{-}SSB}$, and the power control strategy may refer to a calculation formula for transmission power, including the function min(,) for taking a minimum value.

Taking FIG. 6 as an example, two RB Sets, RB Set 2 and RB Set 3, are included in the COT. When channel maintenance is performed on the SSB slot, LBT of RB Set 3 fails and cannot be transmitted, while LBTs of RB Set 1 and RB Set 2 are successful.

Example 1

The transmission power of each SSB on each RB Set is determined, which is equivalent to the case where Gap > 0.

For the transmission power of an SSB on the Anchor RB Set:

$$P_{anchor\_S\text{-}SSB}(i) = min\left(P_{CMAX\_anchor}, P_{O,S\text{-}SSB} + 10\log_{10}\left(2^{\mu} \cdot L \cdot M_{RB}^{S\text{-}SSB}\right) + \alpha_{S\text{-}SSB} \cdot PL\right) - 10\log_{10}(L) \; [dBm]$$

or

$$P_{anchor\_S\text{-}SSB}(i) = min\left(P_{CMAX\_anchor} - 10\log_{10}(L), P_{O,S\text{-}SSB} + 10\log_{10}\left(2^{\mu} \cdot M_{RB}^{S\text{-}SSB}\right) + \alpha_{S\text{-}SSB} \cdot PL\right) \; [dBm]$$

or

$$P_{anchor\_S\text{-}SSB}(i) = min\left(P_{CMAX}, P_{CMAX\_anchor}, P_{O,S\text{-}SSB} + 10\log_{10}\left(2^{\mu} \cdot L \cdot M_{RB}^{S\text{-}SSB}\right) + \alpha_{S\text{-}SSB} \cdot PL\right) - 10\log_{10}(L) \; [dBm]$$

$$or\, P_{anchor\_S\text{-}SSB}(i) = min\begin{pmatrix} P_{CMAX} - 10\log_{10}(L), \, P_{CMAX\_anchor} - 10\log_{10}(L), \\ P_{O,S\text{-}SSB} + 10\log_{10}\left(2^{\mu} \cdot M_{RB}^{S\text{-}SSB}\right) + \alpha_{S\text{-}SSB} \cdot PL \end{pmatrix} \; [dBm]$$

The transmission power of an SSB repetition on the Anchor RB Set is the same as the transmission power of an Anchor SSB on the Anchor RB Set.

For the transmission power of an SSB repetition on the non-Anchor RB Set:

$$P_{non\text{-}anchor\_S\text{-}SSB}(i) = min(P_{CMAX} - P_{CMAX\_anchor} - 10\log_{10}(N_{COT\_non\text{-}anchor\_suc}),$$

$$P_{O,S\text{-}SSB} + 10\log_{10}\left(2^{\mu} \cdot L \cdot M_{RB}^{S\text{-}SSB}\right) + \alpha_{S\text{-}SSB} \cdot PL) - 10\log_{10}(L)$$

$$or \; P_{non\text{-}anchor\_S\text{-}SSB}(i) = min(P_{CMAX} - P_{CMAX\_anchor} - 10\log_{10}(N_{COT\_non\text{-}anchor\_suc}) - 10\log_{10}(L),$$

$$P_{O,S\text{-}SSB} + 10\log_{10}\left(2^{\mu} \cdot M_{RB}^{S\text{-}SSB}\right) + \alpha_{S\text{-}SSB} \cdot PL)$$

L is the number of SSBs within the RB Set. $N_{COTnon\text{-}anchor\_suc}$ is the number of RB Sets with successful LBT among non-anchor RB Sets included in the COT occupied by the device, in this example, the value of $N_{COT\_non\text{-}anchor\_suc}$ is 1.

The transmission power of each SSB within the non-Anchor RB Set is the same.

Example 2

L SSBs on an RB Set are taken as a whole to determine transmission power of an SSB, which is equivalent to the case where Gap = 0.

For the transmission power of an SSB on the Anchor RB Set

$$P_{anchor\_S\text{-}SSB\_all}(i) = \min\left(P_{CMAX\_anchor}, P_{O,S\text{-}SSB} + 10\log_{10}\left(2^{\mu} \cdot L \cdot M_{RB}^{S\text{-}SSB}\right) + \alpha_{S\text{-}SSB} \cdot PL\right)$$
$$[dBm]$$

For the transmission power of an SSB on the non-Anchor RB Set

$$P_{non\text{-}anchor\_S\text{-}SSB\_all}(i) = \min(P_{CMAX} - P_{CMAX\_anchor} - 10\log_{10}(N_{COT\_non\text{-}anchor\_suc}),$$

$$P_{O,S\text{-}SSB} + 10\log_{10}\left(2^{\mu} \cdot L \cdot M_{RB}^{S\text{-}SSB}\right) + \alpha_{S\text{-}SSB} \cdot PL) \ [dBm]$$

Embodiment 6

Example 1

The determination of transmission power of an SSB repetition in a non-anchor resource block set within a specified range on the basis of power configuration parameters includes: a maximum transmission power of SSB repetitions on each non-anchor resource block set within a specified range is determined on the basis of a maximum transmission power of a device and a maximum transmission power of an anchor resource block set, and a maximum transmission power of SSB repetitions on each non-anchor resource block set within a specified range is determined includes remaining power headroom is equally allocated to SSB repetitions corresponding to each non-anchor resource block set within a specified range, wherein the remaining power headroom is a difference between the maximum transmission power of the device and the maximum transmission power of the anchor resource block set.

For the case where Gap = 0, the transmission power of an SSB on the non-Anchor RB Set:

$$P_{non\text{-}anchor\_S\text{-}SSB\_all}(i) = \min\left(P_{CMAX} - P_{CMAX\_anchor} - 10\log_{10}(N_{non_{anchor}}),\right.$$

$$\left.P_{O,S\text{-}SSB} + 10\log_{10}\left(2^{\mu} \cdot L \cdot M_{RB}^{S\text{-}SSB}\right) + \alpha_{S\text{-}SSB} \cdot PL\right) \ [dBm]$$

For the case where Gap > 0, the transmission power of an SSB on the non-Anchor RB Set:

$$P_{non\text{-}anchor\_S\text{-}SSB}(i) = \min\left(P_{CMAX} - P_{CMAX\_anchor} - 10\log_{10}(N_{non\_anchor}),\right.$$

$$\left.P_{O,S\text{-}SSB} + 10\log_{10}\left(2^{\mu} \cdot L \cdot M_{RB}^{S\text{-}SSB}\right) + \alpha_{S\text{-}SSB} \cdot PL\right) \ -10\log_{10}(L) \ [dBm]$$

or

$$P_{non\text{-}anchor\_S\text{-}SSB}(i) = \min\left(P_{CMAX} - P_{CMAX\_anchor} - 10\log_{10}(N_{non\_anchor}) - 10\log_{10}(L),\right.$$

$$\left.P_{O,S\text{-}SSB} + 10\log_{10}\left(2^{\mu} \cdot M_{RB}^{S\text{-}SSB}\right) + \alpha_{S\text{-}SSB} \cdot PL\right) \ [dBm]$$

$N_{non\_anchor}$ is the number of non-Anchor RB Sets within the specified range, $P_{anchor\_SSB\_all}$ denotes transmission power of L SSBs on the Anchor RB Set, and $P_{non\text{-}anchor\_S\text{-}SSB\_all}(i)$ denotes transmission power of L SSBs on a non-Anchor RB Set. $P_{non\text{-}anchor\_S\text{-}SSB}(i)$ denotes transmission power of each SSB on a non-Anchor RB Set.

Example 2

A maximum transmission power of SSB repetitions on all non-anchor resource block sets within a specified range is determined on the basis of a maximum transmission power of a device and a maximum transmission power of an anchor resource block set, the maximum transmission power of SSB repetitions on all non-anchor resource block sets includes a difference between the maximum transmission power of the device and the maximum transmission power of the anchor resource block set;

For the case where Gap = 0, the transmission power of an SSB on the non-Anchor RB Set:

$$P_{\text{non-anchor\_S-SSB\_all}}(i) = \min\left(P_{\text{CMAX}} - P_{\text{CMAX\_anchor}},\right.$$

$$P_{\text{O,S-SSB}} + 10\log_{10}\left(2^{\mu} \cdot N_{\text{non\_anchor}} \cdot L \cdot M_{\text{RB}}^{\text{S-SSB}}\right) + \alpha_{\text{S-SSB}} \cdot PL) \; -10\log_{10}(N_{\text{non\_anchor}}) \; [\text{dBm}]$$

or

$$P_{\text{non-anchor\_S-SSB\_all}}(i) = \min\left(P_{\text{CMAX}} - P_{\text{CMAX\_anchor}} - 10\log_{10}(N_{\text{non\_anchor}}),\right.$$

$$P_{\text{O,S-SSB}} + 10\log_{10}\left(2^{\mu} \cdot N_{\text{non\_anchor}} \cdot M_{\text{RB}}^{\text{S-SSB}}\right) + \alpha_{\text{S-SSB}} \cdot PL) \; [\text{dBm}]$$

For the case where Gap > 0, the transmission power of an SSB on the non-Anchor RB Set:

$$P_{\text{non-anchor\_S-SSB}}(i) = \min\left(P_{\text{CMAX}} - P_{\text{CMAX\_anchor}},\right.$$

$$P_{\text{O,S-SSB}} + 10\log_{10}\left(2^{\mu} \cdot N_{\text{non\_anchor}} \cdot L \cdot M_{\text{RB}}^{\text{S-SSB}}\right) + \alpha_{\text{S-SSB}} \cdot PL) - 10\log_{10}(N_{\text{non\_anchor}}) - 10\log_{10}(L) \; [\text{dBm}]$$

or

$$P_{\text{non-anchor\_S-SSB}}(i) = \min\left(P_{\text{CMAX}} - P_{\text{CMAX\_anchor}} - 10\log_{10}(N_{\text{non\_anchor}}) - 10\log_{10}(L),\right.$$

$$P_{\text{O,S-SSB}} + 10\log_{10}\left(2^{\mu} \cdot M_{\text{RB}}^{\text{S-SSB}}\right) + \alpha_{\text{S-SSB}} \cdot PL) \; [\text{dBm}]$$

$N_{\text{non\_anchor}}$ is the number of non-Anchor RB Sets within the specified range, $P_{\text{anchor\_SSB\_all}}$ denotes transmission power of L SSBs on the Anchor RB Set, and $P_{\text{non-anchor\_S-SSB\_all}}(i)$ denotes transmission power of L SSBs on a non-Anchor RB Set. $P_{\text{non-anchor\_S-SSB}}(i)$ denotes transmission power of each SSB on a non-Anchor RB Set.

Example 3

A maximum transmission power of SSB repetitions on each non-anchor resource block set within a specified range is determined on the basis of a maximum transmission power of a device and transmission power of an SSB and transmission power of an SSB repetition on the anchor resource block set, and the determination of a maximum transmission power of SSB repetitions on each non-anchor resource block set within a specified range includes equally allocating remaining power headroom to SSB repetitions corresponding to each non-anchor resource block set within a specified range, wherein the remaining power headroom is a difference between the maximum transmission power of the device and the transmission power of an SSB and the transmission power of an SSB repetition on the anchor resource block set.

For the case where Gap = 0, the transmission power of an SSB on the non-Anchor RB Set:

$$P_{\text{non-anchor\_S-SSB\_all}}(i) = \min\left(P_{\text{CMAX}} - P_{\text{anchor\_SSB\_L}} - 10\log_{10}(N_{\text{non}_{\text{anchor}}}),\right.$$

$$P_{\text{O,S-SSB}} + 10\log_{10}\left(2^{\mu} \cdot L \cdot M_{\text{RB}}^{\text{S-SSB}}\right) + \alpha_{\text{S-SSB}} \cdot PL) \; [\text{dBm}]$$

For the case where Gap > 0, the transmission power of an SSB on the non-Anchor RB Set:

$$P_{\text{non-anchor\_S-SSB}}(i) = \min\left(P_{\text{CMAX}} - P_{\text{anchor\_SSB\_L}} - 10\log_{10}(N_{\text{non\_anchor}}),\right.$$

$$\left. P_{\text{O,S-SSB}} + 10\log_{10}\left(2^{\mu} \cdot L \cdot M_{\text{RB}}^{\text{S-SSB}}\right) + \alpha_{\text{S-SSB}} \cdot PL\right) - 10\log_{10}(L) \quad [\text{dBm}]$$

or

$$P_{\text{non-anchor\_S-SSB}}(i) = \min\left(P_{\text{CMAX}} - P_{\text{anchor\_SSB\_L}} - 10\log_{10}(N_{\text{non\_anchor}}) - 10\log_{10}(L),\right.$$

$$\left. P_{\text{O,S-SSB}} + 10\log_{10}\left(2^{\mu} \cdot M_{\text{RB}}^{\text{S-SSB}}\right) + \alpha_{\text{S-SSB}} \cdot PL\right) \quad [\text{dBm}]$$

$P_{\text{anchor\_SSB\_L}}$ denotes transmission power of L SSBs on an Anchor RB Set, $P_{\text{anchor\_SSB\_all}}$ denotes transmission power of L SSBs on an Anchor RB Set, $N_{\text{non\_anchor}}$ is the number of non-Anchor RB Sets within the specified range, and $P_{\text{non-anchor\_S-SSB\_all}}(i)$ denotes transmission power of L SSBs on a non-Anchor RB Set. $P_{\text{non-anchor\_S-SS}}B(i)$ denotes transmission power of each SSB on a non-Anchor RB Set.

Example 4

A maximum transmission power of SSB repetitions on all non-anchor resource block sets within a specified range is determined on the basis of a maximum transmission power of a device and transmission power of an SSB and transmission power of an SSB repetition on the anchor resource block set, the maximum transmission power of SSB repetitions on all non-anchor resource block sets includes a difference between the maximum transmission power of the device and the transmission power of an SSB and the transmission power of an SSB repetition on the anchor resource block set.

For the case where Gap = 0, the transmission power of an SSB on the non-Anchor RB Set:

$$P_{\text{non-anchor\_S-SSB\_all}}(i) = \min\left(P_{\text{CMAX}} - P_{\text{anchor\_SSB\_L}},\right.$$

$$\left. P_{\text{O,S-SSB}} + 10\log_{10}\left(2^{\mu} \cdot N_{\text{non\_anchor}} \cdot L \cdot M_{\text{RB}}^{\text{S-SSB}}\right) + \alpha_{\text{S-SSB}} \cdot PL\right) - 10\log_{10}(N_{\text{non\_anchor}}) \quad [\text{dBm}]$$

or $$P_{\text{non-anchor\_S-SSB\_all}}(i) = \min\left(P_{\text{CMAX}} - P_{\text{anchor\_SSB\_L}} - 10\log_{10}(N_{\text{non\_anchor}}),\right.$$

$$\left. P_{\text{O,S-SSB}} + 10\log_{10}\left(2^{\mu} \cdot L \cdot M_{\text{RB}}^{\text{S-SSB}}\right) + \alpha_{\text{S-SSB}} \cdot PL\right) \quad [\text{dBm}]$$

For the case where Gap > 0, the transmission power of an SSB on the non-Anchor RB Set:

$$P_{\text{non-anchor\_S-SSB}}(i) = \min\left(P_{\text{CMAX}} - P_{\text{anchor\_SSB\_L}},\right.$$

$$\left. P_{\text{O,S-SSB}} + 10\log_{10}\left(2^{\mu} \cdot N_{\text{non\_anchor}} \cdot L \cdot M_{\text{RB}}^{\text{S-SSB}}\right) + \alpha_{\text{S-SSB}} \cdot PL\right) - 10\log_{10}(N_{\text{non\_anchor}}) - 10\log_{10}(L) \quad [\text{dBm}]$$

or

$$P_{\text{non-anchor\_S-SSB}}(i) = \min\left(P_{\text{CMAX}} - P_{\text{anchor\_SSB\_L}} - 10\log_{10}(N_{\text{non\_anchor}}) - 10\log_{10}(L),\right.$$

$$\left. P_{\text{O,S-SSB}} + 10\log_{10}\left(2^{\mu} \cdot M_{\text{RB}}^{\text{S-SSB}}\right) + \alpha_{\text{S-SSB}} \cdot PL\right) \quad [\text{dBm}]$$

$P_{anchor\_SSB\_L}$ denotes transmission power of L SSBs on an Anchor RB Set, $N_{non\_anchor}$ is the number of non-Anchor RB Sets within the specified range, and $P_{non-anchor\_S-SSB\_all}(i)$ denotes transmission power of L SSBs on a non-Anchor RB Set. $P_{non-anchor\_S-SS}B(i)$ denotes transmission power of each SSB on a non-Anchor RB Set.

Embodiment 7

In this embodiment, the transmission of an SSB repetition by the device on a non-Anchor RB Set during the SSB slot for channel maintenance is subject to certain limitations.

Example 1

The device may continue to transmit an SSB repetition on a non-Anchor RB Set for channel maintenance only when it attempts to transmit an SSB on an Anchor RB Set. In actual transmission, the transmission of an SSB repetition on a non-Anchor RB Set is not affected by the LBT result of the Anchor RB Set, the non-Anchor RB Set actually transmitted is a RB Set included in the COT or the non-Anchor RB Set actually transmitted is a RB Set included in the COT that have successful LBT.

Example 2

The device that transmits SSB repetitions on non-Anchor RB Sets during the SSB slot is either the UE that initialized the COT or a responding UE that continues to use the COT after the SSB Slot.

An embodiment of the present application provides a synchronization signal block transmission method. FIG. 7 is a structural schematic diagram of a synchronization signal block transmission device provided in an embodiment. As shown in FIG. 7, the synchronization signal block transmission device includes: a power determination module 210, configured to determining transmission power for an synchronization signal block (SSB) and transmission power of an SSB repetition on an SSB slot on the basis of power configuration parameters; and a transmission module 220, configured to transmit the SSB and the SSB repetition on a specific resource block set on the SSB slot on the basis of the transmission power of the SSB and the transmission power of the SSB repetition.

In this embodiment, the synchronization signal block transmission device may determine transmission power of an SSB and SSB repetition on the basis of power configuration parameters, and an SSB and SSB repetition are transmitted on a specific resource block set on an SSB time slot to implement synchronization and channel maintenance, thereby improving reliability and stability of SL communication.

In one embodiment, the specific resource block set includes one of the following: an anchor resource block set and a non-anchor resource block set within channel occupancy time; an anchor resource block set and a non-anchor resource block set for which listen-before-talk (LBT) is successful within channel occupancy time; a resource block set within channel occupancy time; or a resource block set for which LBT is successful within channel occupancy time.

In one embodiment, the power configuration parameters include a maximum transmission power of a device and a maximum transmission power of an anchor resource block set;

the power determination module 210 includes an anchor power determination unit, configured to determine transmission power of an anchor resource block set on the basis of power configuration parameters, the transmission power of an anchor resource block set includes transmission power of an SSB and transmission power of an SSB repetition in the anchor resource block set; and a non-anchor power determination unit, configured to determine transmission power of an SSB repetition in a non-anchor resource block set within a specified range on the basis of power configuration parameters, or determine transmission power of an SSB repetition in a non-anchor resource block set within a specified range on the basis of power configuration parameters and transmission power of SSB and transmission power of an SSB repetition in the anchor resource block set.

In one embodiment, the non-anchor power determination unit is configured to determine a maximum transmission power of SSB repetitions on each non-anchor resource block set within a specified range on the basis of a maximum transmission power of a device and a maximum transmission power of an anchor resource block set, and the determination of a maximum transmission power of SSB repetitions on each non-anchor resource block set within a specified range includes remaining power headroom is equally allocated to SSB repetitions corresponding to each non-anchor resource block set within a specified range, wherein the remaining power headroom is a difference between the maximum transmission power of the device and the maximum transmission power of the anchor resource block set; or determine a maximum transmission power of SSB repetitions on all non-anchor resource block sets within a specified range on the basis of a maximum transmission power of a device and a maximum transmission power of an anchor resource block set, the maximum transmission power of SSB repetitions on all non-anchor resource block sets includes a difference between the maximum transmission power of the device and the maximum transmission power of the anchor resource block set.

The determination of transmission power of an SSB repetition in a non-anchor resource block set within a specified range, on the basis of power configuration parameters and transmission power of an SSB and transmission power of an SSB repetition in the anchor resource block set, includes: a maximum transmission power of SSB repetitions on each non-anchor resource block set within a specified range is determined on the basis of a maximum transmission power of a device and transmission power of an SSB and transmission power of an SSB repetition on the anchor resource block set, and a maximum transmission power of SSB repetitions on each non-anchor resource block set within a specified range is determined includes remaining power headroom is equally allocated to SSB repetitions corresponding to each non-anchor resource block set within a specified range, wherein the remaining power headroom is a difference between the maximum transmission power of the device and the transmission power of an SSB and the transmission power of an SSB repetition on the anchor resource block set; or a maximum transmission power of SSB repetitions on all non-anchor resource block sets within a specified range is determined on the basis of a maximum transmission power of a device and transmission power of an SSB and transmission power of an SSB repetition on the anchor resource block set, the maximum transmission power of SSB repetitions on all non-anchor resource block sets includes a difference between the maximum transmission power of the device and the transmission power of an SSB and the transmission power of an SSB repetition on the anchor resource block set.

In one embodiment, the anchor power determination unit is configured to, upon the condition that power control parameters are configured, determine transmission power of the anchor resource block set on the basis of the power control parameters, power control strategy and a maximum transmission power of the anchor resource block set as transmission power of L SSBs of the anchor resource block set; or determine transmission power of the anchor resource block set on the basis of the power control parameters, power control strategy and a maximum transmission power of the anchor resource block set, and equally allocate the transmission power on the anchor resource block set to L SSBs within the anchor resource block set.

In one embodiment, the anchor power determination unit is configured to determine transmission power of the anchor resource block set on the basis of a maximum transmission power of the anchor resource block set as transmission power of L SSBs of the anchor resource block set; or determine transmission power of the anchor resource block set on the basis of a maximum transmission power of the anchor resource block set, and equally allocate the transmission power on the anchor resource block set to L SSBs within the anchor resource block set.

In one embodiment, the non-anchor power determination unit is further configured to, upon the condition that power control parameters are configured, determine transmission power of the non-anchor resource block set on the basis of the power control parameters, power control strategy and a maximum transmission power of an SSB repetition on the non-anchor resource block set, as transmission power of L SSB repetitions of the non-anchor resource block set; or determine transmission power of the non-anchor resource block set on the basis of the power control parameters, power control strategy and a maximum transmission power of an SSB repetition on the non-anchor resource block set, and equally allocate the transmission power of the non-anchor resource block set to L SSBs within the non-anchor resource block set.

In one embodiment, the non-anchor power determination unit is further configured to, upon the condition that power control parameters are not configured, determine transmission power of the non-anchor resource block set is on the basis of a maximum transmission power of an SSB repetition on the non-anchor resource block set, as transmission power of L SSB repetitions of the non-anchor resource block set; or determine transmission power of the non-anchor resource block set on the basis of a maximum transmission power of an SSB repetition on the non-anchor resource block set, and equally allocate the transmission power of the non-anchor resource block set to L SSBs within the non-anchor resource block set.

In one embodiment, the non-anchor power determination unit is further configured to, upon the condition that power control parameters are configured, determine transmission power of all non-anchor resource block sets on the basis of the power control parameters, power control strategy and a maximum transmission power of SSB repetitions on all non-anchor resource block sets, and equally allocate the transmission power on all non-anchor resource block sets on the basis of all non-anchor resource block sets, to each non-anchor resource block set in all non-anchor resource block sets as transmission power of L SSBs of corresponding non-anchor resource block sets; or determine transmission power of all non-anchor resource block sets on the basis of the power control parameters, power control strategy and a maximum transmission power of an SSB repetition on the non-anchor resource block set, and equally allocate the transmission power of all non-anchor resource block sets to all SSB repetitions within all non-anchor resource block sets as transmission power of each SSB in each non-anchor resource block set in all non-anchor resource block sets.

In one embodiment, the non-anchor power determination unit is further configured to, upon the condition that power control parameters are not configured, determine transmission power of all non-anchor resource block sets on the basis of a maximum transmission power of SSB repetitions on all non-anchor resource block sets, and equally allocate the transmission power on all non-anchor resource block sets on the basis of all non-anchor resource block sets, to each non-anchor resource block set in all non-anchor resource block sets as transmission power of L SSBs of corresponding non-anchor resource block sets; or determine transmission power of all non-anchor resource block sets on the basis of a maximum transmission power of an SSB repetition on the non-anchor resource block set, and equally allocate the transmission power of all non-anchor resource block sets to all SSB repetitions within all non-anchor resource block sets as transmission power of each SSB in each non-anchor resource block set in all non-anchor resource block sets.

In one embodiment, the power configuration parameters includes at least one of the following: a maximum transmission power of a device, a maximum transmission power of an SSB and an SSB repetition on an anchor resource block set, maximum transmission power corresponding to each non-anchor resource block set in all non-anchor resource block sets within a specified range, maximum transmission power of SSB repetitions in all non-anchor resource block sets within a specified range, or maximum transmission power corresponding to each resource block set in the bandwidth part.

In one embodiment, the power determination module 210 is configured to determine transmission power for an SSB and transmission power of an SSB repetition in an anchor resource block set, and transmission power of an SSB repetition in a non-anchor resource block set on the basis of power configuration parameters.

In one embodiment, the determination of transmission power of an SSB and transmission power of an SSB repetition on an SSB time slot on the basis of power configuration parameters includes: upon the condition that power control parameters are configured, transmission power of L SSBs in an anchor resource block set is determined on the basis of the power control parameters, power control strategy and a maximum transmission power of the anchor resource block set, and transmission power of each non-anchor resource block set is determined on the basis of the power control parameters, power control strategy and maximum transmission power corresponding to each non-anchor resource block set within the specified range, as transmission power of L SSB repetitions in corresponding resource block sets; or transmission power of each resource block set is determined on the basis of the power control parameters, power control strategy and maximum transmission power corresponding to each resource block set in the bandwidth part, and the transmission power of each resource block set is equally allocated to L SSBs within corresponding resource block set.

In one embodiment, the determination of transmission power for an synchronization signal block (SSB) and transmission power of an SSB repetition on an SSB slot on the basis of power configuration parameters includes: upon the condition that power control parameters are not configured, transmission power of each resource block set is determined, on the basis of maximum transmission power corresponding to the anchor resource block set or each non-anchor resource block set within a specified range, as transmission power of L SSBs of corresponding resource block sets; or transmission power of each resource block set is determined, on the basis of maximum transmission power corresponding to the anchor resource block set or each non-anchor resource block set within a specified range, and transmission power of each resource block set is equally allocated to L SSBs within corresponding resource block set.

In one embodiment, the determination of transmission power for an SSB and transmission power of an SSB repetition on an SSB slo on the basis of power configuration parameters includes: upon the condition that power control parameters are configured, transmission power of an anchor resource block set is determined on the basis of the power control parameters, power control strategy and a maximum transmission power of the anchor resource block set, transmission power of all non-anchor resource block sets within a specified range is determined on the basis of the power control parameters, power control strategy and maximum transmission power corresponding to all non-anchor resource block sets within a specified range, the determined transmission power on an anchor resource block set is used as transmission power of L SSBs within the anchor resource block set, and transmission power of all non-anchor resource block sets within a specified range is equally allocated to each non-anchor resource block set in all non-anchor resource block sets within a specified range as transmission power of L SSB repetitions in each non-anchor resource block set on all non-anchor resource block sets within a specified range; or transmission power of an anchor resource block set is determined on the basis of the power control parameters, power control strategy and a maximum transmission power of the anchor resource block set, on the basis of the power control parameters, power control strategy and transmission power of all non-anchor resource block sets within a specified range, the determined transmission power on an anchor resource block set is equally allocated to L SSBs within the anchor resource block set, and transmission power of all non-anchor resource block sets within a specified range is equally allocated to all SSB repetitions on all non-anchor resource block sets within the specified range.

In one embodiment, the determination of transmission power for an SSB and transmission power of an SSB repetition on an SSB slot on the basis of power configuration parameters includes: upon the condition that power control parameters are not configured, transmission power of an anchor resource block set is determined on the basis of a maximum transmission power of the anchor resource block set, transmission power of all non-anchor resource block sets within a specified range is determined on the basis of maximum transmission power corresponding to all non-anchor resource block sets within a specified range, the determined transmission power on an anchor resource block set is used as transmission power of L SSBs within the anchor resource block set, and transmission power of all non-anchor resource block sets within a specified range is equally allocated to each non-anchor resource block set in all non-anchor resource block sets within a specified range as transmission power of L SSB repetitions in each non-anchor resource block set on all non-anchor resource block sets within a specified range; or transmission power of an anchor resource block set is determined on the basis of a maximum transmission power of the anchor resource block set, transmission power of all non-anchor resource block sets within a specified range is determined on the basis of maximum transmission power corresponding to all non-anchor resource block sets within a specified range, the determined transmission power on an anchor resource block set is equally allocated to L SSBs within the anchor resource block set, and transmission power of all non-anchor resource block sets within a specified range is equally allocated to all SSB repetitions on all non-anchor resource block sets within the specified range.

In one embodiment, the non-anchor resource block set within the specified range includes at least one of the following: a non-anchor resource block set within a bandwidth part, a non-anchor resource block set within a resource pool where channel occupancy time is located, a non-anchor resource block set within channel occupancy time or a non-anchor resource block set for which listen-before-talk (LBT) is successful that is contained within channel occupancy time, or an empty set.

In one embodiment, maximum transmission power corresponding to each resource block set within a specified range satisfies at least one of the following: each resource block set corresponds to a maximum transmission power; an anchor resource block set corresponds to a first maximum transmission power, and a non-anchor resource block set corresponds to a second maximum transmission power; each resource block set corresponds to a third maximum transmission power; or each resource block set corresponds to a maximum transmission power of a device.

In one embodiment, the power configuration parameters include a maximum transmission power of a device; the determination of transmission power for an SSB and transmission power of an SSB repetition on an SSB slot on the basis of power configuration parameters includes: transmission power for an SSB and transmission power of an SSB repetition in each anchor resource block set is determined on the basis of power configuration parameters.

In one embodiment, the determination of transmission power for an SSB and transmission power of an SSB repetition in each anchor resource block set on the basis of power configuration parameters includes: upon the condition that power control parameters are configured, transmission power for an SSB and transmission power of an SSB repetition in each anchor resource block set is determined, on the basis of the power control parameters and power control strategy, as transmission power of L SSBs of corresponding anchor resource block set; or transmission power for an SSB and transmission power of an SSB repetition in each anchor resource block set is determined on the basis of the power control parameters and power control strategy, and transmission power of each resource block set is equally allocated to L SSBs within corresponding resource block set; wherein a sum of transmission power for an SSB and transmission power of an SSB repetition in an anchor resource block set does not exceed the maximum transmission power of the device.

In one embodiment, the determination of transmission power for an SSB and transmission power of an SSB repetition in each anchor resource block set on the basis of power configuration parameters includes: upon the condition that power control parameters are not configured, transmission power for an SSB and transmission power of an SSB repetition in each anchor resource block set is determined, on the basis of the maximum transmission power of the device, as transmission power of L SSBs of corresponding anchor resource block set; or transmission power for an SSB and transmission power of an SSB repetition in each anchor resource block set is determined on the basis of the maximum transmission power of the device, and transmission power of each resource block set is equally allocated to L SSBs within corresponding resource block set; wherein the resource block set is an anchor resource block set.

In one embodiment, the transmission of the SSB and the SSB repetition on a resource block set corresponding to the SSB slot on the basis of transmission power of the SSB and transmission power of the SSB repetition includes: upon the condition that a sum of transmission power for an SSB and transmission power of an SSB repetition in each anchor resource block set is greater than the maximum transmission power of the device, a corresponding SSB and SSB repetition are transmitted on the basis of transmission power for an SSB and transmission power of an SSB repetition corresponding to an anchor resource block set; K non-anchor resource block sets are selected; SSB repetitions corresponding to the K non-anchor resource block sets are transmitted on the basis of transmission power of SSB repetitions corresponding to the selected K non-anchor resource block sets; wherein a sum of transmission power of SSBs and SSB repetitions in the anchor resource block set and transmission power of SSBs and SSB repetitions corresponding to the K non-anchor resource block sets does not exceed the maximum transmission power of the device.

In one embodiment, selecting K non-anchor resource block sets includes one of the following: starting from the anchor resource block set, K non-anchor resource block sets are selected in order of increasing resource block set indices; starting from the anchor resource block set, K non-anchor resource block sets are selected in order of decreasing resource block set indices; starting from the anchor resource block set, K non-anchor resource block sets are selected alternately in order of decreasing resource block set indices by 1 and increasing resource block set indices by 1; starting from the anchor resource block set, K non-anchor resource block sets are selected alternately in order of increasing resource block set indices by 1 and decreasing resource block set indices by 1; starting from a position of a resource block set with a smallest index among resource block sets contained in channel occupancy time, K non-anchor resource block sets are selected in order of increasing resource block set indices; starting from a position of a resource block set with a largest index among resource block sets contained in channel occupancy time, K non-anchor resource block sets are selected in order of decreasing resource block set indices; starting from a position of a resource block set with a smallest index among resource block sets contained in channel occupancy time, K non-anchor resource block sets are selected in order of increasing resource block set indices; or K frequency-domain contiguous non-anchor resource block sets are selected from resource block sets contained in channel occupancy time.

In one embodiment, a communication node that transmits an SSB repetition on a non-anchor resource block set on the SSB time slot is either an initiating node of channel occupancy time or a responding node that uses the channel occupancy time after the SSB time slot.

The synchronization signal block transmission device proposed in the embodiments and the synchronization signal block transmission method proposed in the above-mentioned embodiments belong to the same inventive concept, the technical details not described in detail in this embodiment may be referred to any of the above embodiments, and this embodiment has the same beneficial effects as those of performing the synchronization signal block transmission method.

An embodiment of the present application further provides a communication node, FIG. 8 is a schematic diagram illustrating a hardware structure of a communication node provided in an embodiment, as shown in FIG. 8, the communication node provided by the present application includes a processor 310 and a memory 320; there may be one or more processors 310 in the communication node, and one processor 310 is taken as an example in FIG. 8; the memory 320 is configured to store one or more programs; the one or more programs are executed by the one or more processors 310, such that the one or more processors 310 implement the synchronization signal block transmission method as described in embodiments of the present application.

The communication node further includes: a communication device 330, an input device 340 and an output device 350.

The processor 310, memory 320, communication device 330, input device 340 and output device 350 in the communication node may be connected via a bus or other means, the connection via a bus is taken as an example in FIG. 8.

The input device 340 may be used to receive input digital or character information and generate key signal input related to user settings and function control of the communication node. The output device 350 may include a display device such as a screen.

The communication device 330 may include a receiver and a transmitter. The communication device 330 is configured to perform information transmission and reception communication according to the control of the processor 310.

The memory 320, as a computer-readable storage medium, may be configured to store software programs, computer executable programs, and modules, such as program instructions/modules corresponding to the synchronization signal block transmission method described in embodiments of the present application (for example, the power determination module 210 and the transmission module 220 in the synchronization signal block transmission device). The memory 320 can include a program storage area and a data storage area, wherein the program storage area can store an operating system and an application required for at least one function; the storage data area may store data created according to the use of the communication node. In addition, the memory 320 can include a high-speed random access memory, and can also comprise a non-volatile memory, such as at least one disk storage device, a flash memory device or other non-volatile solid-state storage device. In some instances, the memory 320 may further include a memory remotely disposed relative to the processor 310, and these remote memories can be connected to the communication node via network. Examples of the above-mentioned network include, but are not limited to, the Internet, an intranet, a local area network, a mobile communication network, or combinations thereof.

The embodiments of the present application further provide a storage medium, the storage medium stores a computer program, and the computer program is executed by a processor to implement the synchronization signal block transmission method described in any one of embodiments of the present application. The method includes: transmission power for a synchronization signal block (SSB) and transmission power of an SSB repetition on an SSB slot is determined on the basis of power configuration parameters; and the SSB and the SSB repetition are transmitted on a specific resource block set on the SSB slot on the basis of the transmission power of the SSB and the transmission power of the SSB repetition.

The computer storage medium in embodiments of the present application may adopt any combination of one or more computer-readable media. The computer-readable medium may be a computer-readable signal medium or a computer-readable storage medium. The computer-readable storage medium may be, but not limited to, for example, an electrical, magnetic, optical, electromagnetic, infrared, or semiconductor system, device or device, or any combination of the above. More specific examples (non-exhaustive list) of computer-readable storage media include an electrical connection with one or more wires, a portable computer disk, a hard disk, a random access memory (RAM), a read-only memory (ROM), an erasable programmable read-only memory (EPROM), a flash memory, an optical fiber, a portable CD-ROM, an optical storage device, a magnetic storage device, or any suitable combination of the above. The computer-readable storage medium may be any tangible medium containing or storing a program, the program may be used by an instruction execution system, a device or a device or used in combination with it.

The computer-readable signal media may include data signals propagated in a baseband or as part of a carrier wave, which carries computer-readable program code. Such propagated data signals may take a variety of forms, including but not limited to electromagnetic signals, optical signals, or any suitable combination of the above. The computer-readable signal media may also be any computer-readable medium other than a computer-readable storage medium, which may send, propagate, or transmit a program for use by or in conjunction with an instruction execution system, device, or apparatus.

The program code included in the computer-readable medium may be transmitted by using any appropriate medium, including but not limited to wireless, wire, optical cable, radio frequency (RF), etc., or any suitable combination of the above.

The computer program code for performing the operation of the present application may be written in one or more programming languages or a combination thereof, the programming language includes object-oriented programming languages, such as Java, Smalltalk, C++, as well as conventional procedural programming languages, such as "C" language or similar programming languages. The program code may be executed entirely on a user's computer, partially on a user's computer, as an independent software package, partially on a user's computer and partially on a remote computer, or completely on a remote computer or server. In the case involving a remote computer, the remote computer may be connected to a user's computer via any type of network, including a local area network (LAN) or a wide area network (WAN), or it may be connected to an external computer (e.g., using an Internet service provider to connect via the Internet).

The above descriptions are merely exemplary embodiments of the present application and are not intended to limit the protection scope of the present application.

It will be appreciated by those skilled in the art that the term user terminal covers any suitable type of wireless user equipment, such as a mobile phone, a portable data processor, a portable web browser or a vehicle-mounted mobile station.

In general, various embodiments of the present application may be implemented in hardware or dedicated circuit, software, logic or any combination thereof. For example, some aspects may be implemented in hardware, while other aspects may be implemented in firmware or software that may be executed by a controller, microprocessor or other computing device, although the present application is not limited thereto.

Embodiments of the present application may be implemented by executing computer program instructions by a data processor of a mobile device, for example in a processor entity, or by hardware, or a combination of software and hardware. The computer program instructions may be assembly instructions, instruction set architecture (ISA) instructions, machine instructions, machine-dependent instructions, microcode, firmware instructions, state setting data, or source code or object code written in any combination of one or more programming languages.

The block diagram of any logic flow in the drawings of the present application may represent program steps, or may represent interconnected logic circuits, modules and functions, or may represent a combination of program steps and logic circuits, modules and functions. A computer program may be stored in a memory. The memory may be of any type suitable for the local technical environment and may be implemented by using any suitable data storage technology, such as but not limited to, read-only memory (ROM), random access memory (RAM), optical memory devices and systems, digital video disc (DVD) or compact disk (CD), etc. The computer-readable medium may include non-transitory storage medium. The data processor may be of any type suitable for the local technical environment, such as but not limited to, general-purpose computer, special-purpose computer, microprocessor, digital signal processor (DSP), application-specific integrated circuit (ASIC), field-programmable gate array (FGPAs) or processor based on multi-core processor architecture.

By way of exemplary and non-limiting examples, a detailed description of exemplary embodiments of the present application has been provided above. However, in light of the accompanying drawings and claims, various modifications and adaptations to the above-described embodiments will be apparent to those skilled in the art without departing from the scope of the present application. Therefore, the proper scope of the present application will be determined according to the claims.

**Claims**

1. A synchronization signal block transmission method, comprising:

   determining, on the basis of power configuration parameters, transmission power for a synchronization signal block SSB on an SSB slot and transmission power of an SSB repetition; and
   transmitting, on the basis of the transmission power of the SSB and the transmission power of the SSB repetition, the SSB and the SSB repetition on a specific resource block set on the SSB slot.

2. The method according to claim 1, wherein the specific resource block set comprises one of the following:

   an anchor resource block set and a non-anchor resource block set within channel occupancy time;

an anchor resource block set and a non-anchor resource block set for which listen-before-talk LBT is successful within channel occupancy time;

a resource block set within channel occupancy time; and

a resource block set for which LBT is successful within channel occupancy time.

3. The method according to claim 1, wherein the power configuration parameters comprise a maximum transmission power of a device and a maximum transmission power of an anchor resource block set;

the determination, on the basis of power configuration parameters, of transmission power for an SSB on an SSB slot and transmission power of an SSB repetition, comprises:

determining transmission power of an anchor resource block set on the basis of power configuration parameters, where the transmission power of the anchor resource block set comprises transmission power of an SSB and transmission power of an SSB repetition in the anchor resource block set; and

determining transmission power of an SSB repetition in a non-anchor resource block set within a specified range on the basis of the power configuration parameters, or determining transmission power of an SSB repetition in a non-anchor resource block set within a specified range on the basis of the power configuration parameters and the transmission power of an SSB and the transmission power of an SSB repetition in the anchor resource block set.

4. The method according to claim 3, wherein the determination of transmission power of an SSB repetition in a non-anchor resource block set within a specified range on the basis of the power configuration parameters comprises:

determining a maximum transmission power of SSB repetitions on each non-anchor resource block set within a specified range on the basis of the maximum transmission power of a device and the maximum transmission power of an anchor resource block set, which determination comprises equally allocating remaining power headroom to SSB repetitions corresponding to each non-anchor resource block set within the specified range, wherein the remaining power headroom is a difference between the maximum transmission power of the device and the maximum transmission power of the anchor resource block set; or

determining a maximum transmission power of SSB repetitions on all non-anchor resource block sets within a specified range on the basis of the maximum transmission power of a device and the maximum transmission power of an anchor resource block set, where the maximum transmission power of SSB repetitions on all non-anchor resource block sets comprises a difference between the maximum transmission power of the device and the maximum transmission power of the anchor resource block set;

wherein the determination of transmission power of an SSB repetition in a non-anchor resource block set within a specified range on the basis of the power configuration parameters and the transmission power of an SSB and the transmission power of an SSB repetition in the anchor resource block set comprises:

determining a maximum transmission power of SSB repetitions on each non-anchor resource block set within a specified range on the basis of the maximum transmission power of a device and the transmission power of an SSB and the transmission power of an SSB repetition on the anchor resource block set, which determination comprises equally allocating remaining power headroom to SSB repetitions corresponding to each non-anchor resource block set within a specified range, wherein the remaining power headroom is a difference between the maximum transmission power of the device and the transmission power of an SSB and the transmission power of an SSB repetition on the anchor resource block set; or

determining a maximum transmission power of SSB repetitions on all non-anchor resource block sets within a specified range on the basis of the maximum transmission power of a device and the transmission power of an SSB and the transmission power of an SSB repetition on the anchor resource block set, where the maximum transmission power of SSB repetitions on all non-anchor resource block sets comprises a difference between the maximum transmission power of the device and the transmission power of an SSB and the transmission power of an SSB repetition on the anchor resource block set.

5. The method according to claim 3, wherein the determination of transmission power of an anchor resource block set on the basis of power configuration parameters comprises:

upon the condition that power control parameters are configured,

determining transmission power of the anchor resource block set, on the basis of the power control parameters, power control strategy and a maximum transmission power of the anchor resource block set, as transmission power of L SSBs of the anchor resource block set; or

determining, on the basis of the power control parameters, power control strategy and a maximum transmission power of the anchor resource block set, transmission power of the anchor resource block set, and equally allocating the transmission power on the anchor resource block set to L SSBs within the anchor resource block set.

6. The method according to claim 3, wherein the determination of transmission power of an anchor resource block set on the basis of power configuration parameters comprises:

upon the condition that power control parameters are not configured,
determining transmission power of the anchor resource block set, on the basis of the maximum transmission power of the anchor resource block set, as transmission power of L SSBs of the anchor resource block set; or
determining, on the basis of the maximum transmission power of the anchor resource block set, transmission power of the anchor resource block set, and equally allocating the transmission power on the anchor resource block set to L SSBs within the anchor resource block set.

7. The method according to claim 4, wherein the determination of transmission power of an SSB repetition in a non-anchor resource block set within a specified range on the basis of the power configuration parameters further comprises:

upon the condition that power control parameters are configured,
determining transmission power of the non-anchor resource block set, on the basis of the power control parameters, power control strategy and a maximum transmission power of an SSB repetition on the non-anchor resource block set, as transmission power of L SSB repetitions of the non-anchor resource block set; or
determining, on the basis of the power control parameters, power control strategy and a maximum transmission power of an SSB repetition on the non-anchor resource block set, transmission power of the non-anchor resource block set, and equally allocating the transmission power of the non-anchor resource block set to L SSBs within the non-anchor resource block set.

8. The method according to claim 4, wherein the determination of transmission power of an SSB repetition in a non-anchor resource block set within a specified range on the basis of the power configuration parameters further comprises:

upon the condition that power control parameters are not configured,
determining transmission power of the non-anchor resource block set, on the basis of a maximum transmission power of an SSB repetition on the non-anchor resource block set, as transmission power of L SSB repetitions of the non-anchor resource block set; or
determining, on the basis of a maximum transmission power of an SSB repetition on the non-anchor resource block set, transmission power of the non-anchor resource block set, and equally allocating the transmission power of the non-anchor resource block set to L SSBs within the non-anchor resource block set.

9. The method according to claim 4, wherein the determination of transmission power of an SSB repetition in a non-anchor resource block set within a specified range on the basis of the power configuration parameters further comprises:

upon the condition that power control parameters are configured,
determining, on the basis of the power control parameters, power control strategy and a maximum transmission power of SSB repetitions on all non-anchor resource block sets, transmission power of all non-anchor resource block sets, and equally allocating the transmission power on all non-anchor resource block sets, according to all non-anchor resource block sets, to each non-anchor resource block set in all non-anchor resource block sets, as transmission power of L SSBs of corresponding non-anchor resource block sets; or
determining, on the basis of the power control parameters, power control strategy and a maximum transmission power of an SSB repetition on the non-anchor resource block set, transmission power of all non-anchor resource block sets, and equally allocating the transmission power of all non-anchor resource block sets to all SSB repetitions within all non-anchor resource block sets, as transmission power of each SSB in each non-anchor resource block set in all non-anchor resource block sets.

10. The method according to claim 4, wherein the determination of transmission power of an SSB repetition in a non-anchor resource block set within a specified range on the basis of the power configuration parameters further comprises:

upon the condition that power control parameters are not configured,
determining, on the basis of a maximum transmission power of SSB repetitions on all non-anchor resource block sets, transmission power of all non-anchor resource block sets, and equally allocating the transmission power on all non-anchor resource block sets, according to all non-anchor resource block sets, to each non-anchor resource block set in all non-anchor resource block sets, as transmission power of L SSBs of corresponding non-anchor resource block sets; or
determining, on the basis of a maximum transmission power of an SSB repetition on the non-anchor resource block set, transmission power of all non-anchor resource block sets, and equally allocating the transmission power of all non-anchor resource block sets to all SSB repetitions within all non-anchor resource block sets, as transmission power of each SSB in each non-anchor resource block set in all non-anchor resource block sets.

11. The method according to claim 1, wherein the power configuration parameters comprises at least one of the following: a maximum transmission power of a device, a maximum transmission power of an SSB and an SSB repetition on an anchor resource block set, a maximum transmission power corresponding to each non-anchor resource block set in all non-anchor resource block sets within a specified range, a maximum transmission power of SSB repetitions in all non-anchor resource block sets within a specified range, or a maximum transmission power corresponding to each resource block set in a bandwidth part;
wherein the determination, on the basis of power configuration parameters, transmission power for an SSB on an SSB slot and transmission power of an SSB repetition, comprises:
determining, on the basis of power configuration parameters, transmission power for an SSB and transmission power of an SSB repetition in an anchor resource block set, and transmission power of an SSB repetition in a non-anchor resource block set.

12. The method according to claim 11, wherein the determination, on the basis of power configuration parameters, transmission power for an SSB on an SSB slot and transmission power of an SSB repetition, comprises:

upon the condition that power control parameters are configured,
determining transmission power of L SSBs in an anchor resource block set on the basis of the power control parameters, power control strategy and a maximum transmission power of the anchor resource block set, and determining transmission power of each non-anchor resource block set, on the basis of the power control parameters, power control strategy and maximum transmission power corresponding to each non-anchor resource block set within the specified range, as transmission power of L SSB repetitions in corresponding resource block sets;
or,
determining transmission power of each resource block set on the basis of the power control parameters, power control strategy and maximum transmission power corresponding to each resource block set in the bandwidth part, and equally allocating the transmission power of each resource block set to L SSBs within corresponding resource block set.

13. The method according to claim 11, wherein the determination, on the basis of power configuration parameters, transmission power for an SSB on an SSB slot and transmission power of an SSB repetition, comprises:

upon the condition that power control parameters are not configured,
determining transmission power of each resource block set, on the basis of maximum transmission power corresponding to the anchor resource block set or each non-anchor resource block set within a specified range, as transmission power of L SSBs of corresponding resource block sets; or
determining transmission power of each resource block set, on the basis of maximum transmission power corresponding to the anchor resource block set or each non-anchor resource block set within a specified range, and equally allocating transmission power of each resource block set to L SSBs within corresponding resource block set.

14. The method according to claim 12, wherein the determination, on the basis of power configuration parameters, transmission power for an SSB on an SSB slot and transmission power of an SSB repetition, comprises:

upon the condition that power control parameters are configured,
determining transmission power of an anchor resource block set on the basis of the power control parameters, power control strategy and a maximum transmission power of the anchor resource block set, determining transmission power of all non-anchor resource block sets within a specified range on the basis of the power control parameters, power control strategy and maximum transmission power corresponding to all non-anchor resource block sets within a specified range, taking the determined transmission power on an anchor resource block set as transmission power of L SSBs within the anchor resource block set, and equally allocating transmission power of all non-anchor resource block sets within a specified range to each non-anchor resource block set in all non-anchor resource block sets within a specified range as transmission power of L SSB repetitions in each non-anchor resource block set on all non-anchor resource block sets within a specified range; or determining transmission power of an anchor resource block set on the basis of the power control parameters, power control strategy and a maximum transmission power of the anchor resource block set, on the basis of the power control parameters, power control strategy and transmission power of all non-anchor resource block sets within a specified range, equally allocating the determined transmission power on an anchor resource block set to L SSBs within the anchor resource block set, and equally allocating transmission power of all non-anchor resource block sets within a specified range to all SSB repetitions on all non-anchor resource block sets within the specified range.

15. The method according to claim 12, wherein the determination, on the basis of power configuration parameters, transmission power for an SSB on an SSB slot and transmission power of an SSB repetition, comprises:

upon the condition that power control parameters are not configured, determining transmission power of an anchor resource block set on the basis of a maximum transmission power of the anchor resource block set, determining transmission power of all non-anchor resource block sets within a specified range on the basis of maximum transmission power corresponding to all non-anchor resource block sets within a specified range, taking the determined transmission power on an anchor resource block set as transmission power of L SSBs within the anchor resource block set, and equally allocating transmission power of all non-anchor resource block sets within a specified range to each non-anchor resource block set in all non-anchor resource block set within a specified range as transmission power of L SSB repetitions in each non-anchor resource block set on all non-anchor resource block sets within a specified range; or determining transmission power of an anchor resource block set on the basis of a maximum transmission power of the anchor resource block set, determining transmission power of all non-anchor resource block sets within a specified range on the basis of maximum transmission power corresponding to all non-anchor resource block sets within a specified range, equally allocating the determined transmission power on an anchor resource block set to L SSBs within the anchor resource block set, and equally allocating transmission power of all non-anchor resource block sets within a specified range to all SSB repetitions on all non-anchor resource block sets within the specified range.

16. The method according to claim 4, wherein the non-anchor resource block set within the specified range comprises at least one of the following: a non-anchor resource block set within a bandwidth part, a non-anchor resource block set within a resource pool where channel occupancy time is located, a non-anchor resource block set within channel occupancy time or a non-anchor resource block set for which listen-before-talk LBT is successful that is contained within channel occupancy time, or an empty set.

17. The method according to claim 12, wherein maximum transmission power corresponding to each resource block set within a specified range satisfies at least one of the following:

each resource block set corresponds to one maximum transmission power; an anchor resource block set corresponds to a first maximum transmission power, and a non-anchor resource block set corresponds to a second maximum transmission power; each resource block set corresponds to a third maximum transmission power; or each resource block set corresponds to a maximum transmission power of a device.

18. The method according to claim 1, wherein the power configuration parameters comprise a maximum transmission power of a device; the determination, on the basis of the power configuration parameters, transmission power for an SSB on an SSB slot and transmission power of an SSB repetition, comprises: determining transmission power for an SSB and transmission power of an SSB repetition in each anchor resource block set on the basis of the power configuration parameters.

19. The method according to claim 18, wherein the determination of transmission power for an SSB and transmission power of an SSB repetition in each anchor resource block set on the basis of the power configuration parameters comprises:

upon the condition that power control parameters are configured,
determining transmission power for an SSB and transmission power of an SSB repetition in each anchor resource block set, on the basis of the power control parameters and power control strategy, as transmission power of L SSBs of corresponding anchor resource block set; or
determining transmission power for an SSB and transmission power of an SSB repetition in each anchor resource block set on the basis of the power control parameters and power control strategy, and equally allocating transmission power of each resource block set to L SSBs within corresponding resource block set;
wherein a sum of transmission power for an SSB and transmission power of an SSB repetition in an anchor resource block set does not exceed the maximum transmission power of the device.

20. The method according to claim 18, wherein the determination of transmission power for an SSB and transmission power of an SSB repetition in each anchor resource block set on the basis of the power configuration parameters comprises:

upon the condition that power control parameters are not configured,
determining transmission power for an SSB and transmission power of an SSB repetition in each anchor resource block set, on the basis of the maximum transmission power of the device, as transmission power of L SSBs of corresponding anchor resource block set; or
determining, on the basis of the maximum transmission power of the device, transmission power for an SSB and transmission power of an SSB repetition in each anchor resource block set, and equally allocating transmission power of each resource block set to L SSBs within corresponding resource block set;
wherein the resource block set is an anchor resource block set.

21. The method according to claim 18, wherein transmitting the SSB and the SSB repetition on a resource block set corresponding to an SSB slot on the basis of the transmission power of the SSB and the transmission power of the SSB repetition comprises:

upon the condition that a sum of transmission power for an SSB and transmission power of an SSB repetition in each anchor resource block set is greater than the maximum transmission power of the device, transmitting a corresponding SSB and SSB repetition on the basis of transmission power for an SSB and transmission power of an SSB repetition corresponding to an anchor resource block set;
selecting K non-anchor resource block sets;
on the basis of transmission power of SSB repetitions corresponding to the selected K non-anchor resource block sets, transmitting SSB repetitions corresponding to the K non-anchor resource block sets;
wherein a sum of transmission power of SSBs and SSB repetitions in the anchor resource block set and transmission power of SSBs and SSB repetitions corresponding to the K non-anchor resource block sets does not exceed the maximum transmission power of the device.

22. The method according to claim 21, wherein selecting K non-anchor resource block sets comprises one of the following:

starting from the anchor resource block set, selecting K non-anchor resource block sets in order of increasing resource block set indices;
starting from the anchor resource block set, selecting K non-anchor resource block sets in order of decreasing resource block set indices;
starting from the anchor resource block set, alternately selecting K non-anchor resource block sets in order of decreasing resource block set indices by 1 and increasing resource block set indices by 1;
starting from the anchor resource block set, alternately selecting K non-anchor resource block sets in order of increasing resource block set indices by 1 and decreasing resource block set indices by 1;
starting from a position of a resource block set with a smallest index among resource block sets contained in channel occupancy time, selecting K non-anchor resource block sets in order of increasing resource block set indices;
starting from a position of a resource block set with a largest index among resource block sets contained in channel occupancy time, selecting K non-anchor resource block sets in order of decreasing resource block set indices;

starting from a position of a resource block set with a smallest index among resource block sets contained in channel occupancy time, selecting K non-anchor resource block sets in order of increasing resource block set indices; or

selecting K frequency-domain contiguous non-anchor resource block sets from resource block sets contained in channel occupancy time.

23. The method according to claim 1, wherein a communication node that transmits an SSB repetition on a non-anchor resource block set on the SSB time slot is either an initiating node of channel occupancy time or a responding node that uses the channel occupancy time after the SSB time slot.

24. The method according to claim 1, wherein transmission power of SSBs within a single resource block set is the same.

25. A communication node, comprising: a memory, and one or more processors;

   wherein the memory is configured to store one or more programs;
   when the one or more programs are executed by the one or more processors, the one or more processors implement the synchronization signal block transmission method according to any one of claims 1-24.

26. A computer-readable storage medium, having a computer program stored thereon, wherein the program, when executed by a processor, implements the synchronization signal block transmission method according to any one of claims 1-24.

Determine transmission power for a synchronization signal block (SSB) and transmission power of an SSB repetition on an SSB slot on the basis of power configuration parameters ⌇ 110

Transmit the SSB and the SSB repetition on a specific resource block set on the SSB slot on the basis of the transmission power of the SSB and the transmission power of the SSB repetition ⌇ 120

FIG. 1

FIG. 2

FIG. 3

FIG. 4

FIG. 5

FIG. 6

FIG. 7

FIG. 8

## INTERNATIONAL SEARCH REPORT

| International application No. |
| --- |
| **PCT/CN2024/103243** |

| A. | CLASSIFICATION OF SUBJECT MATTER |
| --- | --- |

H04W56/00(2009.01)i

According to International Patent Classification (IPC) or to both national classification and IPC

| B. | FIELDS SEARCHED |
| --- | --- |

Minimum documentation searched (classification system followed by classification symbols)

IPC: H04W H04L

Documentation searched other than minimum documentation to the extent that such documents are included in the fields searched

Electronic data base consulted during the international search (name of data base and, where practicable, search terms used)

CNTXT, ENTXT, ENTXTC, 3GPP: 同步信号块, 资源块, 集合, 重复, 传输, 发送, 发射, 功率, 锚, SS, SSB, RB, set, repetition, transmit, power, anchor

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 117939615 A (ZTE CORP.) 26 April 2024 (2024-04-26)<br>claims 1-26 | 1-26 |
| X | 3GPP. "3rd Generation Partnership Project; Technical Specification Group Radio Access Network; NR; Physical layer procedures for control (Release 17)"<br>*3GPP TS 38.213 V17.6.0*, 30 June 2023 (2023-06-30),<br>section 16.2.0 | 1-2, 18, 23-26 |
| A | WO 2023051473 A1 (HUAWEI TECHNOLOGIES CO., LTD.) 06 April 2023 (2023-04-06)<br>entire document | 1-26 |
| A | WO 2022165744 A1 (QUALCOMM INC.) 11 August 2022 (2022-08-11)<br>entire document | 1-26 |
| A | US 2023029173 A1 (QUALCOMM INC.) 26 January 2023 (2023-01-26)<br>entire document | 1-26 |
| A | ZTE et al. "Discussion on physical layer structures and procedures for SL-U"<br>*3GPP TSG RAN WG1 #112, R1-2300355*, 03 March 2023 (2023-03-03),<br>entire document | 1-26 |

☐ Further documents are listed in the continuation of Box C.    ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **18 September 2024** | **24 September 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2024/103243**

| Patent document cited in search report | | | Publication date (day/month/year) | Patent family member(s) | | | Publication date (day/month/year) |
|---|---|---|---|---|---|---|---|
| CN | 117939615 | A | 26 April 2024 | None | | | |
| WO | 2023051473 | A1 | 06 April 2023 | KR | 20240064024 | A | 10 May 2024 |
| | | | | EP | 4408055 | A1 | 31 July 2024 |
| | | | | US | 2024237051 | A1 | 11 July 2024 |
| | | | | CN | 115884211 | A | 31 March 2023 |
| | | | | CN | 116193595 | A | 30 May 2023 |
| WO | 2022165744 | A1 | 11 August 2022 | None | | | |
| US | 2023029173 | A1 | 26 January 2023 | WO | 2023004221 | A1 | 26 January 2023 |
| | | | | EP | 4374619 | A1 | 29 May 2024 |
| | | | | CN | 117693985 | A | 12 March 2024 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311016788